# EUROPEAN PATENT APPLICATION

(11) **EP 4 307 069 A1**
(43) Date of publication of application: **17.01.2024**
(21) Application number: 23185289.8
(22) Date of filing: 13.07.2023
(51) Int. Cl.: G05B 23/02, G06N 20/00

(54) **METHOD, COMPUTING APPARATUS AND SYSTEM FOR FACILITATING DATA GENERATION**

(30) Priority: 13.07.2022 US 202263388676 P
(71) Applicant: MeltTools LLC, Portage, MI 49002 (US)
(72) Inventor: SHORT, Andrew, Scotts, MI 49088 (US); HSU, William, 1061 Auckland (NZ)
(74) Representative: Matter IP Limited

(57) **Abstract**

A computer implemented method for determining or generating target data for artificial intelligence is disclosed. In one aspect, the method may include identifying an indication of a target state of a first industrial process or asset, or of a second industrial process or asset operatively associated with the first industrial process or asset, and determining or generating target data, based on the identified indication of the target state. The identification of the indication of the target state may be based on first monitoring data indicative of data output from first monitoring data source(s) associated with the first industrial process or asset or with the second industrial process or asset. The target data may be determined or generated from second monitoring data indicative of data output from second monitoring data source(s) associated with the first industrial process or asset.

## Description

### FIELD OF THE INVENTION

The present invention relates to computer-implemented systems, methods and/or devices for generating or determining data of interest for artificial intelligence applications.

### BACKGROUND OF THE INVENTION

Machine learning techniques have become significant contributors in automating complex tasks. These techniques rely on high-quality data for training robust and accurate models, retraining the models, evaluating their performance, and more. In industrial settings, where automation plays a pivotal role in enhancing quality and productivity, the availability of relevant and reliable data for building and improving machine learning models becomes critical. Traditionally, data collection and annotation for machine learning in industrial processes has been laborious and resource intensive.

Central to automating industrial practices, such as defect detection and process control in manufacturing, is the collection of monitoring data that informs and guides automation. This data, acquired through sensors or devices monitoring industrial processes and assets, can encompass various aspects or parameters like current, voltage, temperature, or images/videos. However, only a subset of this data is typically required for automation purposes, such as training, retraining, or evaluating machine learning models.

Information about the relevant subset(s) of the collected data may be provided to indicate, for instance, a state or states of the industrial process(es) and/or asset(s) represented by the subset of data. This information may include annotations, such as labels and/or tagging information of interest, attributed to the subset(s) of data by a human annotator or other application. In this instance, an annotator (or annotation application) may be required to first analyze the collected data, identify relevant subset(s) of data representative of a state, and then annotate the data accordingly. Analyzing the full collected dataset can prove to be very time-consuming and inefficient. Moreover, the quality and relevance of the subset of data identified by the annotator may vary due to human subjectivity, leading to suboptimal model performance.

From a computational standpoint, when a process is monitored using an image capturing device, for instance, the resultant video or frame stream can create a high volume of data, posing a data handling challenge in terms of real-time processing and adequate storage space for such data. In addition, the task of associating other information with relevant subset(s) of the video or frame stream may prove to be very cumbersome, particularly where a human annotator is involved.

Accordingly, there is a need to more efficiently and effectively determine or identify a small subset of data of interest from a large set of collected data associated with an industrial asset or process, for the purposes of assisting in generating or improving a machine learning model that can be used in the automation of an industrial practice.

### SUMMARY OF THE INVENTION

It is an object of the present invention to provide an alternative system, method and/or device for generating or determining target data of interest for Artificial Intelligence (AI) applications, that overcomes at least some of the challenges described above, or to at least provide the public with a useful choice.

In a first aspect, the invention may broadly be said to consist of a computer-implemented method associated with a first industrial process or asset, comprising: identifying an indication of a target state of the first industrial process or asset, or of a second industrial process or asset operatively associated with the first industrial process or asset, the identification of the indication of the target state being based on first monitoring data indicative of data output from first monitoring data source(s) associated with the first industrial process or asset or with the second industrial process or asset, and determining or generating target data, based on the identified indication of the target state, from second monitoring data indicative of data output from second monitoring data source(s) associated with the first industrial process or asset.

Implementations of the first aspect may include one or more of the features of one or more of the following embodiments.

In an embodiment, the first monitoring data source(s) comprises data source(s) monitoring the first industrial process or asset.

In an embodiment, the first monitoring data source(s) comprises data source(s) monitoring the second industrial process or asset.

In an embodiment, the method further comprises, prior to identifying the indication of the target state, receiving the first monitoring data.

In an embodiment, the step of determining or generating the target data is performed in response to identifying the indication of the target state.

In an embodiment, the step of identifying the indication of the target state comprises identifying an indication of an instance of the target state.

In an embodiment, the step of determining or generating the target data comprises determining or generating the target data based on second monitoring data indicative of data output from the one or more second monitoring data source(s) during a period corresponding to the instance of the target state.

In an embodiment, the step of determining or generating the target data comprises determining or generating the target data based on second monitoring data indicative of data output from the one or more second monitoring data source(s) during a period immediately preceding the instance of the target state.

In an embodiment, the step of determining or generating the target data comprises determining or generating the target data based on second monitoring data indicative of data output from the one or more second monitoring data source(s) during a period immediately following the instance of the target state.

In an embodiment, the step of determining or generating the target data comprises generating the target data.

In an embodiment, generating the target data comprises generating the target data based on second monitoring data indicative of data output from the one or more second monitoring data source(s) upon or after identifying the indication of the target state.

In an embodiment, the step of determining or generating the target data comprises determining the target data based on second monitoring data indicative of data output from the one or more second monitoring data source(s).

In an embodiment, the method comprises: identifying one or more instance(s) of the target state of the first or second industrial process or asset, and determining or generating target data based on one or more of the instance(s).

In an embodiment, the method comprises determining or generating target data based on each of the one or more instance(s).

In an embodiment, the method comprises continuously monitoring the first or second industrial process or asset using the one or more first monitoring data source(s).

In an embodiment, the step of continuously monitoring occurs substantially simultaneously to the step of identifying the one or more instances of the target state.

In an embodiment, the first monitoring data is indicative of values of one or more operational parameters associated with the first or second industrial process or asset.

In an embodiment, the first monitoring data comprises a time-series dataset.

In an embodiment, the first monitoring data comprises a multivariate time series dataset.

In an embodiment, the first monitoring data source(s) comprises one or more sensors.

In an embodiment, the one or more first monitoring data source(s) comprises one or more of: current sensor(s), voltage sensor(s), thermal sensor(s), spectrometer(s), laser triangulation sensor(s), potentiometer(s), vibration sensor(s), acoustic sensor(s), wire or powder feeding sensor(s) and/or gas flow sensor(s), mass flow rate sensor(s).

In an embodiment, the first monitoring data includes image data associated with the first or second industrial process or asset.

In an embodiment, the first monitoring data includes video data associated with the first or second industrial process or asset.

In an embodiment, the target data comprises image data associated with the first industrial process or asset.

In an embodiment, the target data comprises video data of the industrial process or asset.

In an embodiment, the second monitoring data source(s) comprises at least one or more image capturing device(s).

In an embodiment, the second monitoring data source(s) comprise one or more of the first monitoring data source(s).

In an embodiment, the first monitoring data source(s) comprises one or more first data source type(s).

In an embodiment, the second monitoring data source(s) comprises one or more second data source type(s) that differ from the one or more first data source type(s).

In an embodiment, the second monitoring data source(s) comprises one or more of the first data source type(s).

In an embodiment, the target data comprises synchronized data indicative of data output from two or more data source(s) of the second data source type(s) and/or of the first data source type(s).

In an embodiment, the first monitoring data further comprises data indicative of data output from one or more of second data source type(s) associated with the first or second industrial process or asset.

In an embodiment, identifying the target state is based on a state detection model.

In an embodiment, the state detection model is trained.

In an embodiment, the state detection model is configured to detect one of a plurality of states associated with the first or second industrial process or asset including the target state, and the method further comprises detecting one of the plurality of states based on the first monitoring data.

In an embodiment, the target state is an abnormal state associated with the first or second industrial process or asset.

In an embodiment, the state detection model is configured to detect one of two states including the abnormal state and a normal state.

In an embodiment, the state detection model comprises a first predetermined model representative of the normal state and the state detection model is configured to detect the normal state when the first monitoring data substantially conforms with the predetermined model of the normal state.

In an embodiment, the state detection model is configured to detect the abnormal state when the first monitoring data substantially deviates from the predetermined model of the normal state.

In an embodiment, the normal state comprises a steady state of operation of the industrial process or asset.

In an embodiment, the normal state further comprises an expected, non-steady state of operation of the industrial process or asset.

In an embodiment, the state detection model is further configured to detect one or more of the following states of operation associated with the first or second industrial process or asset: an operation commencement state; an operation suspension state; an operation resumption state; an operation termination state; and/or an operation transition state.

In an embodiment, the state detection model is trained based on initial training data acquired using training data source(s).

In an embodiment, the training data is associated with a predefined training state of the first or second industrial process or asset, or a similar industrial process or asset.

In an embodiment, the predefined training state corresponds to a second state of the first or second industrial process or asset, that differs from the target state.

In an embodiment, the predefined training state corresponds to a normal state of the first or second industrial process or asset, or a similar industrial process or asset.

In an embodiment, the initial training data comprises data indicative of data output from one or more of the first monitoring data source(s) associated with the first or second industrial process or asset, or a similar industrial process or asset.

In an embodiment, the method further comprises retraining the state detection model based on retraining data indicative of data output from the one or more training data source(s).

In an embodiment, the state detection model comprises an artificial neural network.

In an embodiment, the state detection model comprises an autoencoder.

In an embodiment, the state detection model is configured to receive the first monitoring data and detect the target state based on the received first monitoring data.

In an embodiment, the trained state detection model is further configured to: process the first monitoring data to determine one or more parameter value(s), compare the one or more parameter value(s) to a predetermined threshold criterion to obtain a comparison result, and determine a state associated with the industrial asset or process based on the comparison result.

In an embodiment, the target state of operation is determined when the parameter value(s) exceed the threshold criterion or criteria.

In an embodiment, the one or more parameter values(s) includes an error parameter value.

In an embodiment, the step of detecting the target state comprises: processing the first monitoring data to generate state detection data, and using the state detection model to detect the target state based on the generated state detection data.

In an embodiment, processing the first monitoring data comprises identifying and extracting first monitoring data relating to steady-state operational stages associated with the first or second industrial process or asset.

In an embodiment, the predetermined operational stages exclude periods of commencement, suspension or termination associated with the first or second industrial process or asset.

In an embodiment, processing the first monitoring data comprises comparing the data to a predetermined criterion or criteria indicative of the predetermined operational stages.

In an embodiment, the step of determining or generating the target data further comprises: identifying indications of periods of commencement and termination of an instance of the target state of operation of the first or second industrial process or asset based on the first monitoring data, and batching data indicative of data output from the second monitoring data source(s) during a continuous period between, and optionally including one or both of, the periods of commencement and termination of the instance of the target state of operation.

In an embodiment, the continuous period further includes a period immediately prior to commencement of the instance of the target state of operation.

In an embodiment, the continuous period further includes a period immediately following the period of termination of the instance of the target state of operation.

In an embodiment, the method comprises: identifying indications of periods of commencement and termination of two or more consecutive instance(s) of the target state of operation of the first or second industrial process or asset based on the first monitoring data, and batching data indicative of data output from the second monitoring data source(s) during a continuous period between, and optionally including one or both of, the periods of commencement and termination of the consecutive instances of the target state of operation.

In an embodiment, step of identifying the indication of termination of each instance of the target state comprises identifying an alternative state of operation to the target state based on the first monitoring data.

In an embodiment, determining or generating the target data further comprises storing the batched data in one or more target data storage mediums.

In an embodiment, the step of storing the batched data occurs substantially simultaneously while batching the data.

In an embodiment, the target data comprises synchronous data indicative of data output from two or more data source(s).

In an embodiment, the target data comprises data acquired during a period immediately preceding detection of the target state of operation.

In an embodiment, the target data comprises data acquired during a period immediately following termination of the target state of operation.

In an embodiment, determining or generating the target data comprises: continuously writing data indicative of data output from the one or more second monitoring data source(s) during operation of the industrial process or asset into a data buffer until the data buffer is full; and reading the data written into a target data storage medium to generate the target data if at least one instance of the target state of the industrial process or asset is detected during the writing stage.

In an embodiment, the method further comprises repeating the writing and reading or deleting stages until a termination condition is detected.

In an embodiment, a size of the data buffer is predetermined and fixed.

In an embodiment, a size of the data buffer is variable.

In an embodiment, the step of generating the target data further comprises, during the writing stage, increasing the size of the data buffer from a predetermined base size to continue writing data to the data buffer until a termination condition is identified.

In an embodiment, the termination condition is an indication of termination of the instance of the target state.

In an embodiment, the method further comprises retraining the state detection model based on the first monitoring data received during at least an instance where no indication of the target state of operation is detected.

In an embodiment, the method further comprises training a machine learning model based on the target data.

In an embodiment, the step of training the machine learning model comprises training the machine learning model using a supervised training technique.

In an embodiment, the step of training the machine learning model comprises training the machine learning model using an unsupervised training technique.

In an embodiment, the method further comprises annotating the target data.

In an embodiment, the method further comprises evaluating a performance of a machine learning model based on the target data.

In an embodiment, the method further comprises performing statistical analysis on the first industrial asset or process based on the target data.

Other embodiments of the first aspect include corresponding computer or industrial systems, computing apparatuses, and/or computer programs recorded on one or more computer readable medium or media, each configured to perform the actions of one or more of the abovementioned methods.

In a second aspect, the invention may broadly be said to consist of a computing apparatus comprising: at least one processing component ("processor(s)"); and at least one computer readable medium ("memory") having stored therein instructions that, when executed by the processor(s), configure the apparatus to: identify an indication of a target state of the first industrial process or asset, or of a second industrial process or asset operatively associated with the first industrial process or asset, the identification of the indication of the target state being based on first monitoring data indicative of data output from one or more first monitoring data source(s) associated with the first or second industrial process or asset, and determine or generate target data, based on the identified indication of the target state, from second monitoring data indicative of data output from one or more second monitoring data source(s) associated with the first industrial process or asset.

Implementations of the second aspect may include one or more of the features of one or more of the following embodiments.

In an embodiment, the first monitoring data is indicative of data output from one or more first monitoring data source(s) monitoring the first industrial process or asset.

In an embodiment, the first monitoring data is indicative of data output from one or more first monitoring data source(s) monitoring the second industrial process or asset.

In an embodiment, the instructions, when executed by the processor(s) configure the apparatus to, prior to identifying the indication of the target state, receive the first monitoring data.

In an embodiment, the step of determining or generating the target data is performed in response to identifying the indication of the target state.

In an embodiment, the step of identifying the indication of the target state comprises identifying an indication of an instance of the target state.

In an embodiment, the step of determining or generating the target data comprises determining or generating the target data based on second monitoring data indicative of data output from the one or more second monitoring data source(s) during a period corresponding to the instance of the target state.

In an embodiment, the step of determining or generating the target data comprises determining or generating the target data based on second monitoring data indicative of data output from the one or more second monitoring data source(s) during a period immediately preceding the instance of the target state.

In an embodiment, the step of determining or generating the target data comprises determining or generating the target data based on second monitoring data indicative of data output from the one or more second monitoring data source(s) during a period immediately following the instance of the target state.

In an embodiment, the step of determining or generating the target data comprises generating the target data.

In an embodiment, generating the target data comprises generating the target data based on second monitoring data indicative of data output from the one or more second monitoring data source(s) upon or after identifying the indication of the target state.

In an embodiment, the step of determining or generating the target data comprises determining the target data based on second monitoring data indicative of data output from the one or more second monitoring data source(s).

In an embodiment, the instructions, when executed by the processor(s) configure the apparatus to: identify one or more instance(s) of the target state of the first or second industrial process or asset, and determine or generate target data based on one or more of the instance(s).

In an embodiment, the instructions comprise determining or generating target data based on each of the one or more instance(s).

In an embodiment, the instructions, when executed by the processor(s), configure the apparatus to: continuously monitor the first or second industrial process or asset data indicative of data output from the one or more first monitoring data source(s).

In an embodiment, the step of continuously monitoring occurs substantially simultaneously to the step of identifying the one or more instances of the target state.

In an embodiment, the first monitoring data is indicative of values of one or more operational parameters associated with the first or second industrial process or asset.

In an embodiment, the first monitoring data comprises a time-series dataset.

In an embodiment, the first monitoring data comprises a multivariate time series dataset.

In an embodiment, the first monitoring data source(s) comprises one or more sensors.

In an embodiment, the one or more sensors comprises one or more of: current sensor(s), voltage sensor(s), thermal sensor(s), spectrometer(s), laser triangulation sensor(s), potentiometer(s), vibration sensor(s), wire or powder feed sensor(s) and/or gas flow sensor(s), mass flow rate sensor(s).

In an embodiment, the first monitoring data includes image data associated with the first or second industrial process or asset.

In an embodiment, the first monitoring data includes video data associated with the first or second industrial process or asset.

In an embodiment, the target data comprises image data associated with the first industrial process or asset.

In an embodiment, the target data comprises video data of the industrial process or asset.

In an embodiment, the second monitoring data source(s) comprises at least one or more image capture device(s).

In an embodiment, the second monitoring data source(s) comprise one or more of the first monitoring data source(s).

In an embodiment, the first monitoring data source(s) comprises one or more first data source type(s).

In an embodiment, the second monitoring data source(s) comprises one or more second data source type(s) that differ from the one or more first data source type(s).

In an embodiment, the second monitoring data source(s) further comprises one or more of the first data source type(s).

In an embodiment, the target data comprises synchronized data indicative of data output from two or more data source(s) of the second data source type(s) and/or the first data source type(s).

In an embodiment, the first monitoring data further comprises data indicative of data output from one or more of second data source type(s) associated with the first or second industrial process or asset.

In an embodiment, identifying the target state is based on a state detection model.

In an embodiment, the state detection model is trained.

In an embodiment, the target state of operation is an abnormal state of operation.

In an embodiment, the state detection model is configured to detect one of two states including the abnormal state of operation and a normal state of operation.

In an embodiment, the state detection model comprises a predetermined model of normal operation and the state detection model is configured to detect the normal state of operation when the first monitoring data substantially conforms with the predetermined model of normal operation.

In an embodiment, the state detection model is configured to detect the abnormal state of operation when the first monitoring data substantially deviates from the predetermined model of normal operation.

In an embodiment, the instructions further configure the apparatus to detect one or more of the following states of operation associated with the first or second industrial process or asset: an operation commencement state; an operation suspension state; an operation resumption state; an operation termination state; and/or an operation transition state.

In an embodiment, the state detection model is trained based on initial training data indicative of data output from training data source(s).

In an embodiment, the training data is associated with a predefined training state of the first or second industrial process or asset, or a similar industrial process or asset.

In an embodiment, the predefined training state corresponds to a second state of operation of the first or second industrial process or asset, which differs from the target state of operation.

In an embodiment, the predefined training state corresponds to a normal state of operation of the first or second industrial process or asset, or a similar industrial process or asset.

In an embodiment, the initial training data comprises data indicative of data output from one or more of the first monitoring data source(s) associated with the first or second industrial process or asset, or a similar industrial process or asset.

In an embodiment, the instructions, when executed by the processor(s), configure the apparatus to: retrain the state detection model based on retraining data indicative of data output from the one or more training data source(s).

In an embodiment, the state detection model comprises an artificial neural network.

In an embodiment, the state detection model comprises an autoencoder.

In an embodiment, the state detection model is configured to receive the first monitoring data and detect the target state based on the received first monitoring data.

In an embodiment, the trained state detection model is further configured to: process the first monitoring data to determine one or more parameter value(s), compare the one or more parameter value(s) to a predetermined threshold criterion to obtain a comparison result, and determine a state associated with the industrial asset or process based on the comparison result.

In an embodiment, the target state of operation is determined when the parameter value(s) exceed the threshold criterion or criteria.

In an embodiment, the one or more parameter values(s) includes an error parameter value.

In an embodiment, the step of detecting the target state comprises: processing the first monitoring data to generate state detection data, and using the state detection model to detect the target state based on the generated state detection data.

In an embodiment, processing the first monitoring data comprises identifying and extracting first monitoring data relating to predetermined steady-state operational stages associated with the first or second industrial process or asset.

In an embodiment, the predetermined operational stages exclude periods of commencement, suspension or termination associated with the first or second industrial process or asset.

In an embodiment, processing the first monitoring data comprises comparing the data to a predetermined criterion or criteria indicative of the predetermined operational stages.

In an embodiment, the step of determining or generating the target data further comprises: identifying indications of periods of commencement and termination of an instance of the target state of operation of the first or second industrial process or asset based on the first monitoring data, and batching data indicative of data output from the second monitoring data source(s) during a continuous period between, and optionally including one or both of, the periods of commencement and termination of the instance of the target state of operation.

In an embodiment, the continuous period further includes a period immediately prior to commencement of the instance of the target state of operation.

In an embodiment, the continuous period further includes a period immediately following the period of termination of the instance of the target state of operation.

In an embodiment, the step of determining or generating the target data further comprises: identifying indications of periods of commencement and termination of two or more consecutive instance(s) of the target state of operation of the first or second industrial process or asset based on the first monitoring data, and batching data indicative of data output from the second monitoring data source(s) during a continuous period between, and optionally including one or both of, the periods of commencement and termination of the consecutive instances of the target state of operation.

In an embodiment, the step of identifying the indication of termination of each instance of the target state comprises identifying an alternative state of operation to the target state based on the first monitoring data.

In an embodiment, determining or generating the target data further comprises storing the batched data in one or more target data storage mediums.

In an embodiment, the step of storing the batched data occurs substantially simultaneously while batching the data.

In an embodiment, the target data comprises synchronous data indicative of data output from two or more data source(s).

In an embodiment, the target data comprises data acquired during a period immediately preceding detection of the target state of operation.

In an embodiment, the target data comprises data acquired during a period immediately following termination of the target state of operation.

In an embodiment, determining or generating the target data comprises: continuously writing data indicative of data output from the one or more second monitoring data source(s) during operation of the industrial process or asset into a data buffer until the data buffer is full; and reading the data written into a target data storage medium to generate the target data if at least one instance of the target state of the industrial process or asset is detected during the writing stage.

In an embodiment, the instructions further configure the apparatus to repeat the writing and reading stages until a termination condition is detected.

In an embodiment, a size of the data buffer is predetermined and fixed.

In an embodiment, a size of the data buffer is variable.

In an embodiment, the step of generating the target data further comprises, during the writing stage, increasing the size of the data buffer from a predetermined base size to continue writing data to the data buffer until a termination condition is identified.

In an embodiment, the termination condition is an indication of termination of the instance of the target state.

In an embodiment, the instructions, when executed by the processor(s) further configure the apparatus to: retrain a state detection model based on the first monitoring data received during at least an instance where no indication of the target state of operation is detected.

In an embodiment, the instructions, when executed by the processor(s), further configure the apparatus to train a machine learning model based on the target data.

In an embodiment, training the machine learning model comprises training the machine learning model using a supervised training technique.

In an embodiment, training the machine learning model comprises training the machine learning model using an unsupervised training technique.

In an embodiment, the instructions, when executed by the processor(s), further configure the apparatus to enable annotation of the target data.

In an embodiment, the instructions, when executed by the processor(s), further configure the apparatus to evaluate a performance of a machine learning model based on the target data.

In an embodiment, when executed by the processor(s), further configure the apparatus to perform statistical analysis on the first industrial asset or process based on the target data.

Other embodiments of the second aspect include corresponding computer or industrial systems each comprising one or more of the abovementioned apparatus(es).

In a third aspect, the invention may broadly be said to consist of an industrial system comprising: a first industrial asset, and optionally a second industrial asset, configured to perform an industrial process; a computing apparatus having: at least one processing component ("processor(s)"); and at least one computer readable medium ("memory") storing instructions that, when executed by the processor(s), configure the apparatus to: identify an indication of a target state of the first industrial asset or the second industrial asset from first monitoring data indicative of data output from one or more first monitoring data source(s) associated with the first industrial asset or the second industrial asset, and determine or generate target data, based on the identified indication of the target state, from second monitoring data indicative of data output from one or more second monitoring data source(s) associated with the first industrial asset.

Implementations of the third aspect may include one or more of the features of one or more of the following embodiments, and/or any one or more of the features of one or more of the embodiments of the second aspect.

In an embodiment, the system further comprises the first and second monitoring data source(s) monitoring the first industrial asset, and optionally the second industrial asset.

In an embodiment, the step of identifying the target state is based on a state detection model.

In an embodiment, the system further comprises at least one computer readable medium ("memory") having the state detection model stored therein.

In an embodiment, the system further comprises a computing apparatus having at least one processing component ("processor(s)") configured to access the memory to train the state detection model.

In an embodiment, the system further comprises at least one computer readable medium ("memory") having stored therein a machine learning model associated with the industrial process or asset, or a similar industrial asset or process.

In an embodiment, the machine learning model is a classification model.

In an embodiment, the system further comprises a computing apparatus having at least one processing component ("processor(s)") configured to access the memory having the machine learning model stored therein and configure, train, retrain or evaluate the performance of the model based on the target data.

In an embodiment, the computing apparatus further comprises a user interface for enabling a user to configure, train, retrain or evaluate performance of the model based on user input received via the user interface.

In an embodiment, the computing apparatus further comprising a computing apparatus configured to annotate or facilitate annotation of the target data.

In a fourth aspect, the invention may broadly be said to consist of a computer-implemented method associated with an industrial process or asset, comprising: identifying an indication of a target state of the industrial process or asset from first monitoring data indicative of data output from first monitoring data source(s) associated with the industrial process or asset, and determining or generating target data based on the identified indication of the target state, from second monitoring data indicative of data output from second monitoring data source(s) associated with the industrial process or asset.

Implementations of the fourth aspect may include one or more of the features of one or more of the embodiments of the first aspect.

In a fifth aspect, the invention may broadly be said to consist of a computing apparatus comprising: at least one processing component ("processor(s)"); and at least one computer readable medium ("memory") storing instructions that, when executed by the processor(s), configure the apparatus to: identify an indication of a target state of an industrial process or asset from first monitoring data indicative of data output from one or more first monitoring data source(s) associated with the industrial process or asset, and determine or generate target data, based on the identified indication of the target state, from second monitoring data indicative of data output from one or more second monitoring data source(s) associated with the industrial process or asset.

Implementations of the fifth aspect may include one or more of the features of one or more of the embodiments of the second aspect.

In a sixth aspect, the invention may broadly be said to consist of an industrial system comprising: a computing apparatus having: at least one processing component ("processor(s)"); and at least one computer readable medium ("memory") storing instructions that, when executed by the processor(s), configure the apparatus to: identify an indication of a target state of an industrial process or asset from first monitoring data indicative of data output from one or more first monitoring data source(s) associated with the industrial process or asset, and determine or generate target data, based on the identified indication of the target state, from second monitoring data indicative of data output from one or more second monitoring data source(s) associated with the industrial process or asset.

Implementations of the sixth aspect may include one or more of the features of one or more of the embodiments of the third aspect.

In a seventh aspect, the invention may broadly be said to consist of a computer-implemented method associated with an industrial process or asset, comprising: identifying an indication of a target state of the industrial process or asset from first monitoring data indicative of data output from first monitoring data source(s) associated with an industrial process or asset, and determining or generating target data, based on the identified indication of the target state, from second monitoring data indicative of data output from second monitoring data source(s) associated with the same or an associated industrial process or asset.

Implementations of the seventh aspect may include one or more of the features of one or more of the following embodiments, or of the embodiments associated with the first aspect.

In an embodiment, the target data is determined or generated for further processing.

In an embodiment, the target data is determined or generated for annotation purposes.

In an eighth aspect, the invention may broadly be said to consist of a computing apparatus comprising: at least one processing component ("processor(s)"); and at least one computer readable medium ("memory") storing instructions that, when executed by the processor(s), configure the apparatus to: identify an indication of a target state of an industrial process or asset from first monitoring data indicative of data output from one or more first monitoring data source(s) associated with the industrial process or asset, and determine or generate target data, based on the identified indication of the target state, from second monitoring data indicative of data output from one or more second monitoring data source(s) associated with the same or an industrial process or asset.

Implementations of the eighth aspect may include one or more of the features of one or more of the embodiments of the second aspect.

In a ninth aspect, the invention may broadly be said to consist of an industrial system comprising: a computing apparatus having: at least one processing component ("processor(s)"); and at least one computer readable medium ("memory") storing instructions that, when executed by the processor(s), configure the apparatus to: identify an indication of a target state of an industrial process or asset from first monitoring data indicative of data output from one or more first monitoring data source(s) associated with the industrial process or asset, and determine or generate target data, based on the identified indication of the target state, from second monitoring data indicative of data output from one or more second monitoring data source(s) associated with the same or an industrial process or asset.

Implementations of the ninth aspect may include one or more of the features of one or more of the embodiments of the third aspect.

A system of one or more computers can be configured to perform particular operations or actions by virtue of having software, firmware, hardware, or a combination of them installed on the system that in operation causes or cause the system to perform the actions of any one of the abovementioned aspects and their respective implementations. One or more computer programs can be configured to perform particular operations or actions by virtue of including instructions that, when executed by data processing apparatus, cause the apparatus to perform the actions.

Any one or more of the above embodiments can be combined with any one or more of the above aspects.

In any one of the above aspects and/or embodiments the target data may comprise target data for annotation or pre-annotation data. The pre-annotation data may comprise data for labelling ("pre-label data").

In any one of the above aspects and/or embodiments, an industrial asset may comprise a welding torch, device, cell, or a product comprising the welded joint produced using the welding torch device, or cell.

In any one of the above aspects and/or embodiments, an industrial process may be a process performed by a welding cell or device.

In any one of the above aspects and/or embodiments, monitoring of an industrial asset may comprise monitoring any one or more of the welding cell, device and/or joint, or any processes associated with the same, such as an arc welding process.

In any one of the above aspects and/or embodiments, an industrial asset may comprise any one of a CNC machine tooling center, an additive manufacturing cell, a weld overlay system, a thermal spray system, a gluing system, a painting system and the like, and an industrial process may comprise a process performed by any one of the aforementioned assets.

The phrase "quantitative data" or "quantitative dataset" as used in this specification and claims is intended to mean data or a dataset that is objective, measurable and/or quantifiable.

The phrase "qualitative data" or "qualitative dataset" as used in this specification and claims is intended to mean data or a dataset that comprises non-numerical and subjective information.

The term "comprising" as used in this specification and claims means "consisting at least in part of'. When interpreting each statement in this specification and claims that includes the term "comprising", features other than that or those prefaced by the term may also be present. Related terms such as "comprise" and "comprises" are to be interpreted in the same manner.

As used herein the term "and/or" means "and" or "or", or both.

As used herein "(s)" following a noun means the plural and/or singular forms of the noun.

The invention consists in the foregoing and also envisages constructions of which the following gives examples only.

### BRIEF DESCRIPTION OF DRAWINGS

Preferred embodiments of the invention will be described by way of example only and with reference to the drawings, in which:
FIG. 1 is a block diagram of a preferred embodiment industrial system of the invention;
FIG. 2A is a block diagram of a preferred form target data generator of the system of FIG. 1;
FIG. 2B is a block diagram of a preferred form annotation unit of the system of FIG. 1;
FIG. 3A is a block diagram of a preferred form state detector of the system of FIG. 1;
FIG. 3B is a block diagram of a preferred form state detector module of the state detector of FIG. 3A;
FIG. 4 is a flow diagram showing a first preferred form method of the invention associated with the system of FIG. 1;
FIG. 5 is a flow diagram showing a second preferred form method of the invention associated with the system of FIG. 1;
FIG. 6 is a flow diagram showing a third preferred form method of the invention associated with the system of FIG. 1;
FIG. 7 is a flow diagram showing a fourth preferred form method of the invention associated with the system of FIG. 1;
FIG. 8 is a flow diagram showing a fifth preferred form method of the invention associated with the system of FIG. 1.
FIG. 9 is a flow diagram showing a sixth preferred form method of the invention associated with the system of FIG. 1.

### DETAILED DESCRIPTION

In the following description, specific details are given to provide a thorough understanding of the embodiments. However, it will be understood by one of ordinary skill in the art that the embodiments may be practiced without these specific details. For example, software modules, functions, circuits, etc., may be shown in block diagrams in order not to obscure the embodiments in superfluous detail. In other instances, well-known modules, structures, and techniques may not be shown in detail in order not to obscure the embodiment.

Also, it is noted that the embodiments may be described as a process that is depicted as a flowchart, a flow diagram, a structure diagram, or a block diagram. Although a flowchart may describe the operations as a sequential process, many of the operations can be performed in parallel or concurrently, unless it is explicitly stated otherwise, or a prerequisite operation is required to perform another as would be apparent to the skilled person. In addition, the order of the operations may be rearranged, unless explicitly stated otherwise or a prerequisite is required as would be readily apparent. A process is terminated when its operations are completed. A process may correspond to a method, a function, a procedure, a subroutine, a subprogram, etc., in a computer program.

Aspects of the systems and methods described below may be operable on any type of general-purpose computer system or computing device, including, but not limited to, a desktop, laptop, notebook, tablet, or mobile device, which may or may not be part of a cloud computing system. The term "mobile device" includes, but is not limited to, a wireless device, a mobile phone, a mobile communication device, a user communication device, personal digital assistant, mobile hand-held computer, a laptop computer, an electronic book reader and reading devices capable of reading electronic contents and/or other types of mobile devices typically carried by individuals and/or having some form of communication capabilities (e.g., wireless, infrared, short-range radio, etc.).

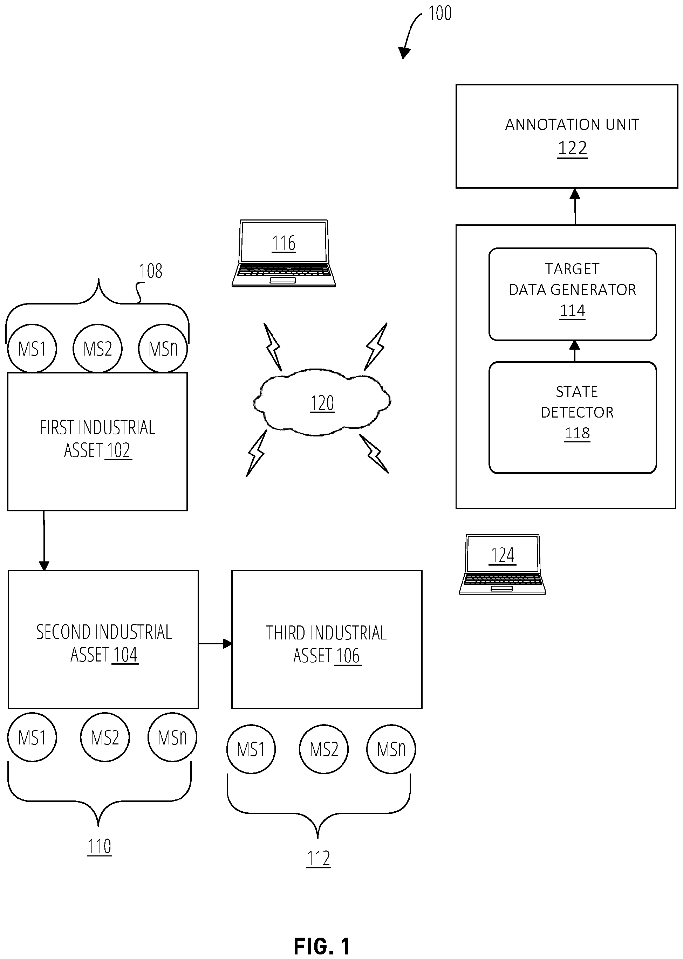

Referring to FIG. 1, an embodiment of a system 100 of the invention is shown comprising multiple industrial assets 102, 104 and 106 operably associated with one another to achieve a target collective outcome or result, monitoring data source(s) 108, 110, 112 (herein also referred to as monitoring device(s) 108, 110, 112), a target data generator 114 and a state detector 118. In the preferred embodiment, the system 100 is configured to identify or detect a target state of an industrial asset 102, 104, 106 and accordingly generate or determine target data of interest based on the state of the industrial asset 102, 104, 106. The target data of interest may be utilized in artificial intelligence applications relating to the same or similar industrial assets, such as for training, improving, or evaluating the performance of machine learning model(s). Such model(s) could be associated with automation or quality control of the same or similar industrial assets, for instance. The target data may be annotated prior to being utilized in the abovementioned manner. In the preferred embodiment, the system 100 detects or determines the target state based on first monitoring data associated with an industrial asset 102, 104, 106 and the target data is generated based on second monitoring data associated with the same or another of the industrial asset(s) 102, 104, 106. The first monitoring data and the second monitoring data may be based on, or indicative of, data collected or generated by one or more of the monitoring device(s) 108, 110, 112. This could be raw data collected or generated by one or more of the monitoring device(s) 108, 110, 112 or other data (e.g., processed data) indicative of the raw data collected or generated by the monitoring device(s) or other intermediary device(s) in the system (such as operator devices or machine interfaces of the industrial asset(s) 102, 104, 106). In one preferred implementation, the second monitoring data comprises data that differs in type to, or a data type that is absent from, the first monitoring data. For instance, the second monitoring data may comprise qualitative (e.g., video or image) data and the first monitoring data may exclude such qualitative data.

Optionally, the system 100 may also comprise one or more operator device(s) 116 and/or other user device(s) 124 (only one of each is shown in the drawings), and an annotation unit 122. The operator and other user device(s) 116, 124 may be accessible on the same or different computing apparatuses. One or more of the devices of the system 100 may be communicatively coupled via one or more public or private communication network(s) 120 (only one of which is shown in the drawings). A computing apparatus includes at least one processing component (i.e., one or more processor(s)) and at least one computer readable medium that stores instructions that cause the computing apparatus to perform any of the methods described herein.

In the embodiment shown, the system 100 comprises three industrial assets 102, 104 and 106. However, this is only exemplary to assist with describing the various features of the invention and is not intended to be limiting. In alternative configurations, the system 100 may comprise any number of one or more industrial asset(s). In embodiments where the system 100 comprises multiple industrial assets, the assets may be cooperatively associated with one another to achieve a target outcome or result of the system 100. The outcome or result may be the completion of a process or of a stage of a process, or the production of a product or part of a product, for example. An industrial asset 102, 104, 106 may be any device or system that is capable of performing a function or functions to achieve the outcome or result (e.g., a welding cell), or it may comprise the outcome or result (e.g., a welded joint or a product comprising the welded joint). There may be one or more industrial processes, or a part of a process performed by or within an industrial asset. Accordingly, and unless explicitly stated otherwise, an action performed in relation to an industrial asset is also intended to cover the same action performed in relation to an industrial process corresponding to the industrial asset. For instance, monitoring an industrial asset could also represent monitoring an industrial process performed by, using, or within the industrial asset. Monitoring an industrial asset could also comprise monitoring a product of, or a product produced by, the industrial asset. In the context of a welding system, for example, the industrial asset may be a welding torch or device, a welding cell or a product or object comprising the welded joint produced using the welding torch or cell. An industrial process performed by a welding cell may be arc welding a joint. Monitoring of the industrial asset may comprise monitoring any one or more of the welding cell, torch, welding joint or any processes associated with the same, such as the arc welding process. Another industrial asset may comprise CNC machine tooling center, an additive manufacturing cell, a weld overlay system, a thermal spray system, a gluing system, a painting system, and the like.

In the embodiment shown, the system 100 comprises multiple monitoring devices 108, 110, 112, for each of the industrial assets 102, 104, 106. In alternative configurations, one or more of the industrial asset(s) 102, 104, 106 may have associated therewith any number of one or more of the respective monitoring devices 108, 110, 112. In some configurations, only one, or some but not all, of the industrial assets within the system 100 may have a monitoring device or multiple monitoring devices associated therewith. Each monitoring device 108, 110, 112 may be positioned externally to the associated industrial asset 102, 104, 106 (as depicted in the drawings) or alternatively, integrated into the associated industrial asset 102, 104 106. In the latter case, the monitoring device may be a voltage, current, or temperature sensor integrated into the industrial asset, for instance.

The monitoring devices 108, 110, 112 are configured to monitor or observe the associated industrial asset 102, 104, 106 by collecting information relating to various aspects or parameters of the industrial asset 102, 104, 106, which collectively may be used by the system to identify a state of the industrial asset 102, 104, 106 and/or to generate target data.

The state detector 118 is configured to receive first monitoring data indicative of data output from one or more monitoring device(s) 108, 110, 112 associated with an industrial asset 102, 104, 106 and identify, detect and/or determine a state of the industrial asset 102, 104, 106 based on the first monitoring data. In this specification, the phrase "first monitoring data" is used to differentiate the monitoring data utilized for state detection of an industrial asset from "second monitoring data" which is utilized for generating or determining the target data. The terms "first" and "second" in this context are not intended to indicate a particular order of receipt or generation of such data, or relative positions of the monitoring data within a data stream for instance (unless stated otherwise). The state detector 118 is preferably communicatively coupled to one or more devices and receives the first monitoring data from the one or more device(s). Such device(s) may comprise one or more of the monitoring devices 108, 110, 112 and accordingly the state detector 118 may be communicatively coupled and configured to receive first monitoring data directly from the monitoring device(s) 108, 110, 112. Alternatively, or in addition, the device(s) may comprise one or more other intermediary device(s) communicatively coupled between the monitoring device(s) 108, 110, 112 and the state detector 118. Such intermediary device(s) may comprise, for instance, the operator device 116 or a communications or machine interface (e.g., a programmable logic controller) of an industrial asset 102, 104, 106. The monitoring device(s) or the intermediary device(s) may process raw data or information collected by the monitoring device(s) to generate the first monitoring data. The first monitoring data may comprise data acquired from machine log data that is indicative of data from sensors that are integrated into the industrial asset. For example, a welding device of the industrial asset may log its own current and/or voltage values, and the first monitoring data may be indicative of these current and/or voltage values. In all cases, the first monitoring data is preferably indicative of data output from one or more of the monitoring device(s) 108, 110, 112 of an industrial asset 102, 104, 106. The first monitoring data may comprise one or multiple datasets relating to one or more types of data. The first monitoring data may comprise multiple datasets corresponding to varying types of data. For instance, the multiple datasets may comprise varying types of operational data (e.g., voltage, current, temperature data etc.).

Unless stated otherwise, reference to a state of an industrial asset in this specification is also intended to include reference to a state of operation an industrial process associated with or performed by the industrial asset, or a state of a product produced by the industrial asset. The state detector 118 may be configured to determine one of multiple pre-defined states associated with the respective industrial asset 102, 104, 106. In a preferred embodiment, the state detector 118 is configured to detect or provide an indication of one of two pre-defined states associated with the respective industrial asset 102, 104, 106, for example, a defective or anomalous/abnormal state and a normal or expected state (herein referred to as "normal state" for brevity).

The normal state in the context of an industrial process may be an expected stage of operation of the process (e.g., the operative stage of the process in which an expected function is being carried out). The expected stage of operation of the process may comprise a steady state of operation of the process, for instance, where one or more process variables remains substantially consistent/constant or within a predetermined range over time. In a welding process for instance, this may include the period of welding a joint where parameters relating to the wire feed speed, welding speed, arc characteristics, and weld pool behavior remain substantially consistent/constant or within a predetermined steady-state range. The normal state could also encompass other expected states of operation of the process that are non-steady state, where one or more parameters are not within target steady-state conditions. Such states include for instance: an operation commencement state; an operation suspension state; an operation resumption state; an operation termination state; and/or an operation transition state. In the context of a product produced by the industrial asset, the normal state may be an expected form or function of the product. Accordingly, the defective or anomalous/abnormal state is any state of the industrial process or product that is not one of the expected normal state(s). An abnormal state may be indicative of a manufacturing defect, a manufacturing tolerance issue, or an automatic or operator-based correction to the manufacturing process. The state detector 118 may comprise one or more machine learning models for detecting or providing data indicative of each one of these normal states and their corresponding abnormal counter-states. Alternatively, a single machine learning model may be configured to detect or provide data indicative of each of the normal states and the corresponding abnormal counter-states. The abovementioned normal states of operation are only exemplary and not intended to be limiting. The states detected by the state detector 118 are ultimately dependent on the system 100 and its intended industrial application.

As mentioned, the state detector 118 may comprise at least one mathematical model (herein: "state detection model") that is configured to detect one or more states of operation based on the received first monitoring data. Each mathematical model may comprise a machine learning (ML) model. The ML model may comprise a neural network (NN), such as an Artificial NN (ANN), a Convolutional NN (CNN) or a Recurrent NN (RNN). The model may comprise a Bidirectional Encoder Representations from Transformers (BERT) based model. The ML model may be trained based on a target outcome. The training may be a supervised, self-supervised or unsupervised training technique, or any combination thereof.

Alternatively, the state detector may comprise a dynamic time warping based model or algorithm, or a clustering model or algorithm. Other models for identifying and/or separating states may be utilized as would be readily apparent to the skilled person.

In the embodiment shown, the state detector 118 comprises one or more NNs configured to identify at least one of two states of an industrial asset 102, 104, 106, based on received first monitoring data associated with the industrial asset 102, 104, 106. The NN may be an ANN, such as an autoencoder. The NN may be configured to identify normal and abnormal states of an industrial asset 102, 104, 106 based on the associated received first monitoring data. Accordingly, the state detector 118 may be considered an anomaly detector in this embodiment.

The state detection model may be trained using appropriate training data acquired from a same or similar industrial asset or process of the same or similar industrial system. The state detection model may be trained using training data that is representative of a normal state of the industrial asset or process. The training data may be based on monitoring data associated with the same or similar industrial asset or process that is representative of a normal state of the industrial asset or process. The training data may comprise the monitoring data. Alternatively, or in addition the training data may comprise one or more features or other parameters determined from the monitoring data. As mentioned, the normal state may be a normal, expected, or target, state of operation or outcome or result, of the industrial asset or process, for instance. The training technique of the state detection model may be unsupervised or self-supervised. In preferred embodiments, the state detection model is trained and then re-trained or continuously re-trained (e.g., periodically, or intermittently retrained) using training data based on new monitoring data associated with the same or similar industrial asset or process that is representative of a normal state of the industrial asset or process. A state detection model trained using training data indicative of a normal state of the industrial asset or process may be configured to detect, based on received first monitoring data, a normal state of the industrial asset or process and/or an abnormal state of the industrial asset or process. The same or one or more other state detection model(s) of the state detector 118 may be trained using training data that is representative of other states of the industrial asset or process which may also be considered normal or expected, including for instance: an operation commencement state; an operation suspension state; an operation resumption state; an operation termination state; and/or an operation transition state, associated with the respective industrial asset 102, 104, 106.

For each of the states, the training data may be based on monitoring data associated with the same or similar industrial asset or process that is representative of the applicable state of the industrial asset or process. The training data may comprise the monitoring data. Alternatively, or in addition the training data may comprise one or more features or other parameters determined from the monitoring data. The training technique of the state detection model may be unsupervised or self-supervised. In preferred embodiments, the state detection model is trained and then re-trained or continuously re-trained (e.g., periodically, or intermittently retrained) using training data based on new monitoring data associated with the same or similar industrial asset or process.

The target data generator 114 is configured to receive second monitoring data indicative of data output from one or more monitoring device(s) 108, 110, 112 associated with an industrial asset 102, 104, 106 and identify, detect and/or determine target data based on the second monitoring data. The target data generator 114 is preferably communicatively coupled to one or more devices and receives the second monitoring data from the one or more device(s). Such device(s) may comprise one or more of the monitoring devices 108, 110, 112 and accordingly the target data generator 114 may be communicatively coupled and configured to receive second monitoring data directly from the monitoring device(s) 108, 110, 112. Alternatively, or in addition, the device(s) may comprise one or more other intermediary device(s) communicatively coupled between the monitoring device(s) 108, 110, 112 and the target data generator 114. Such intermediary device(s) may comprise, for instance, the operator device 116 or a communications or machine interface (e.g., a programmable logic controller) of an industrial asset 102, 104, 106. The monitoring device(s) or the intermediary device(s) may process raw data or information collected by the monitoring device(s) to generate the second monitoring data. The second monitoring data may be acquired from machine log data that is indicative of data from sensors that are integrated into the industrial asset. For example, a welding device of the industrial asset may log its own current and/or voltage values, and the second monitoring data may be indicative of these current and/or voltage values. In all cases, the second monitoring data is preferably indicative of data output from one or more of the monitoring device(s) 108, 110, 112 of an industrial asset 102, 104, 106. The second monitoring data may comprise one or multiple datasets relating to one or more types of data. The second monitoring data may comprise multiple datasets corresponding to varying types of data. For instance, the multiple datasets may comprise operational data (e.g., voltage, current, temperature data etc.) and observational data (e.g., image or video data).

The target data may be utilized in a variety of computing applications, one of which may be to train, retrain, or evaluate the performance of a ML model associated with another function relating to the same and/or a similar industrial asset within the same or a different industrial system. For example, the ML model may be a classification model, the function of which may be to assist in the control of operation of the industrial asset. Other functions include any one or more of: checking and/or predicting the quality of production of an industrial asset, connecting the functions of disparate machines (i.e., one machine affects the next machine), monitoring wear, remote monitoring of production data (e.g., factories can be controlled remotely). These functions are only exemplary and not intended to be limiting.

In some embodiments, the system 100 may further comprise an annotation unit 122 configured to receive the target data and annotate the data for further processing. Further processing may comprise training, retraining, or evaluating a ML model as mentioned above. The annotation unit 122 may enable a human annotator to annotate the target data via a user device 124. In other embodiments, the target data may be received by other or additional units for performing other computational functions on the target data to assist in automation including, for instance: collecting data of interest for quality control purposes such as statistical analysis of deviation from an expected function, outcome or results of an industrial asset or process.

The target data generator 114 is also communicatively coupled or otherwise is configured to receive data output by the state detector 118, or may comprise the state detector 118 in some embodiments. The target data generator 114 is configured to receive data indicative of one or more states, or one or more instances of states, of one or more of the industrial assets 102, 104, 106. Accordingly, the target data generator 114 may generate or determine the target data for one of the industrial assets 102, 104, 106, based on a state associated with the same industrial asset 102, or associated with a different industrial asset 104, 106 in some embodiments. The target data generator 114 also determines or generates the target data based on the received second monitoring data associated with the industrial asset 102. For instance, the target data generator 114 may receive an indication of a target state of one of the industrial assets 102, 104, 106, and accordingly may determine or generate the target data associated with industrial asset 102, based on the indication of the target state, and based on the second monitoring data associated with the industrial asset 102. In some embodiments, the target data generator 114 generates or determines the target data for an industrial asset 102, 104, 106 based on an indication of the target state associated with the same industrial asset 102, 104, 106. In other embodiments, the target data generator 114 generates or determines the target data for an industrial asset 102, based on an indication of the target state associated with another industrial asset 104, 106 of the industrial system 100. The target state mentioned in any of the abovementioned embodiments may be a defective or anomalous state of the respective industrial asset 102, 104, 106, for example.

An annotation unit 122 may be communicatively coupled to the target data generator 114 and configured to receive the target data for annotation. The annotation unit 122 may be configured to annotate or enable the annotation of the received target data. In this specification, data annotation refers to the process of adding relevant metadata, tags, or other information to target data, to provide more detailed insights about aspects of the data, making it more understandable and usable by machines. It involves marking or annotating specific elements or features within the data to provide additional information or context. The annotations can be in the form of labels, bounding boxes, segmentations, keypoints, or any other relevant information that helps in training machine learning models. In this specification, data labeling is considered a subset of data annotation and generally refers to the process of assigning predefined labels or categories to the target data. It involves assigning class labels or tags to the target data. A label may comprise a predefined categorical or numerical value assigned to the target data. It may represent a desired output or ground truth associated with the target data. Labels are commonly used in classification models, where the goal is to predict or estimate a specific value or category for data based on the learned patterns from labeled training examples. An example of labelling could be labelling an image to indicate a target object in the image, such as silica islands. An annotation of that image could include the silica islands label and/or may include an outline or specific location of the silica island(s) in the image.

The annotated data generated by the annotation unit 122 may be utilized to train, retrain, or evaluate the performance of a ML model, such as a NN model, for instance. These functions may also be performed by the annotation unit 122 in some embodiments, or by a separate unit or device that is communicatively coupled to the annotation unit 122. One or more user devices 124 may be communicatively coupled to the annotation unit 122 to enable one or more skilled annotators to review and annotate the target data. In such embodiments, training of a ML model based on the annotated data may be considered supervised. In some embodiments, the annotation unit 122 may be configured to computationally annotate the target data without human input. In such embodiments, training of a ML model based on the annotated data may be considered unsupervised. In some embodiment, the labelling unit 122 may enable a combination of two or more of: supervised, unsupervised and/or self-supervised annotation.

One or more user device(s) 124 may additionally or alternatively be communicatively coupled to the target data generator 114. A user device(s) 124 and an operator device 116 may be the same or separate devices. A user device 124 may comprise a user interface configured to output information to a user via one or more output interface devices, such as electronic displays, speakers, and the like, so the user may review the target and/or annotated data. The user device 124 may also comprise one or more input interface devices, such as keyboards, touch-screen electronic displays and the like, to enable the user to interact with the annotation unit 122. The user device 124 may comprise the target data generator 114 and/or the annotation unit 122 in some embodiments, or it may be separate, but otherwise communicatively coupled to the target data generator 114 and/or the annotation unit 122 in other embodiments.

In preferred embodiments, the state detector 118 is configured to detect or identify an indication of a target state of the first industrial asset 102 based on first monitoring data indicative of data output from one or more monitoring device(s) 108 (e.g., MS1) associated with the first industrial asset 102, and the target data generator 114 is configured to determine or generate target data that comprises or is based on second monitoring data indicative of data output from monitoring device(s) 108 (e.g., MS2) that differ(s) in type from the monitoring device(s) (e.g., MS1) upon which detection of the target state is based. For example, the state detector may detect or identify the target state based on operational monitoring data such as voltage, current and/or temperature data, and the target data may be based on video or image monitoring data. In the same or alternative embodiments, the target data generator 114 may be configured to determine or generate target data that comprises or is based on monitoring data indicative of data output from the same monitoring device(s) 108 (e.g., MS 1) used in detection of the indication of the target state. In some embodiments, the second monitoring data may comprise the first monitoring data.

In the abovementioned embodiments, the state detector 118 may be configured to detect or identify an instance of a target state based on first monitoring data indicative of one or more first monitoring device(s) 108 associated with the first industrial asset (e.g., MS 1 and/or MS2), during the instance of the target state. The target data generator 114 is preferably configured to generate target data associated with the instance of the target state that comprises or is based on second monitoring data indicative of data output from second monitoring device(s) associated with the first industrial asset 108 (e.g., MS3), during the instance of the target state. Preferably that second monitoring data is indicative of data output from monitoring device(s) (e.g., MS3) that differ in type from the first monitoring device(s) (e.g., MS1 and/or MS2). The target data generator 114 may also be configured to generate target data associated with the first instance of the target state that comprises or is based on the monitoring data indicative of data output from the same monitoring device(s) 108 (e.g., MS1 and/or MS2) used in detection of the indication of the target state. In some embodiments, the second monitoring data may comprise the first monitoring data.

In some embodiments, the state detector 118 is configured to detect or identify an indication of a target state of the second or third industrial assets 104, 106 based on first monitoring data indicative of data output from one or more of monitoring device(s) 110, 112 associated with the second or third industrial assets 102, 104, and the target data generator 114 is configured to generate or determine the target data based on second monitoring data indicative of data output from one or more of monitoring device(s) 108 associated with the first industrial asset 102. The target data may be determined or generated based on second monitoring data indicative of data output from monitoring device(s) 108 (e.g., MS2 of 108) associated with the first industrial asset 102, that differ(s) in type from the monitoring device(s) 110, 112 (e.g., MS1 off 110 or 112) upon which detection of the target state is based. For example, the state detector 118 may detect or identify the target state based on operational monitoring data such as voltage, current and/or temperature data associated with the second or third industrial assets 104, 106, and the target data may be based on video or image monitoring data associated with the first industrial asset 102.

In the abovementioned embodiments, the state detector 118 may be configured to detect or identify an instance of a target state based on first monitoring data indicative of one or more first monitoring device(s) associated with the second or third industrial assets 104 or 106 (e.g., MS 1 and/or MS2 of 110 or 112), during the instance of the target state. The target data generator 114 is preferably configured to generate target data associated with the instance of the target state that comprises or is based on second monitoring data indicative of data output from second monitoring device(s) of the first industrial asset 108 (e.g., MS3), during the instance of the target state. Preferably that second monitoring data is indicative of second monitoring devices 108 (e.g., MS3) that differ in type from the first monitoring device(s) (e.g., MS 1 and/or MS2 of 110 and/or 112). The target data generator 114 may also be configured to generate target data associated with the first instance of the target state that comprises or is based on second monitoring data indicative of data output from one or more third monitoring device(s) 108 of the first industrial asset 102 (e.g., MS1 and/or MS2) that are the same in type as the first monitoring devices of asset 104 or 106.

The operator device 116 may be communicatively coupled to one or more of the industrial assets 102, 104, 106 for controlling operation of the asset(s). The operator device 116 may also be communicatively coupled to one or more of the monitoring devices 108, 110, 112 for receiving data relating to the operator's control of the assets or to enable the operator to control the monitoring devices and/or receiving monitoring data therefrom for review. The operator device 116 may comprise a state detection training module 318 associated with the state detector 118 (described in further detail below) and may be configured to allow a user to interface with the state detection training module to train a state detection module 307 of the state detector 118. The operator device 116 comprises a user interface configured to output information to an operator via one or more output interface devices, such as electronic displays, speakers, and the like, and one or more input interface devices, such as keyboards, touch-screen electronic displays and the like, to enable the user to interact with the above-mentioned devices and/or modules. The operator device 116 may also comprise the state detector 118 in some embodiments, or it may be separate, but otherwise communicatively coupled to the state detector 118 in other embodiments.

The monitoring devices 108, 110, 112 are each capable of monitoring one or more process(es) and/or product(s) of an associated industrial asset 102, 104, 106, and outputting data representative of the process(es) and/or product(s). In a welding application, the monitoring devices 108, 110, 112, may monitor any part of or the whole process of welding one or more joints, and/or the one or more joints welded via the process, for instance. Each of the monitoring devices 108, 110, 112, may comprise one or more sensing elements or a combination of sensing elements capable of sensing a characteristic, parameter or attribute, or a combination thereof, and outputting information of a particular type. The monitored characteristic, parameter, or attribute may comprise an operational parameter associated with the industrial asset. In the context of an industrial application, such as a welding or manufacturing application, for instance, each monitoring device 108, 110, 112 may comprise of: a current sensor, a voltage sensor, a potentiometer, a thermal sensor, a spectrometer, a one, two or three dimensional geometry sensor (e.g. laser triangulation or area or line scanning sensor operating, stereo vision sensor, LIDAR etc.), a vibration sensor (e.g., accelerometers or piezoelectric sensors, designed to measure and monitor vibrations, oscillations, or mechanical movements), a wire or powder feeding sensor (e.g., devices or instruments configured to detect and measure the feed rate, position, or presence of wire or powder materials), a gas flow sensor, a mass flow rate sensor, an optical sensor, an acoustic sensor, or any combination thereof, and may output information representative of the sensed parameter(s) and may be captured in either continuous or snapshot mode. This list is only exemplary and not intended to be limiting. Each industrial asset 102, 104, 106 may have any combination of one or more such monitoring devices associated therewith, either integrated into the asset at the time of manufacture of the asset or subsequently associated with the asset. In some embodiments, the monitoring devices 108, 110, 112 comprise of two or more monitoring devices of differing types relative to one another. In the same or other embodiments, the monitoring devices 108 associated with the first industrial asset 102 may comprise two or more monitoring devices of differing types relative to one another. In this specification, "differing types" in the context of monitoring devices is intended to mean monitoring devices having differing sensing capabilities such that the information/data output from the devices represent differing perspectives, variables, or intelligence in relation to the associated industrial asset being monitored. For example, an optical sensor is considered a different type of monitoring device relative to an image capture device, which generally comprises a collection of optical sensors but provides a perspective or intelligence that differs to a single optical sensor.

Each monitoring device 108, 110, 112 may further comprise one or more processing components or units, a computer-readable medium and/or a communication interface for pre-processing, storing and/or communicating the sensed information/data to other devices of the system 100 accordingly. In some embodiments, the target data generator 114 is configured to generate or determine target data based on second monitoring data indicative of data output from at least one monitoring device type that differs from the monitoring device type(s) upon which the first monitoring data associated state detection is based.

The monitoring devices 108, 110, 112 may be each communicatively coupled to the target data generator 114 and to the state detector 118 via wired or wireless communication. In some configurations, one or more monitoring devices 108, 110, 112, may form part of the same device as the target data generator 114 and/or the state detector 118. The state detector 118 and the target data generator 114 may be communicatively coupled via wired or wireless communication, or otherwise may form part of the same device.

Any one or more of the annotation unit 122, the target data generator 114 and/or state detector 118 may be hosted on one or more servers or computing devices and accessible via one or more user devices 116, 124 via one or more computer networks 120. The monitoring devices 108, 110, 112 may be communicatively coupled to the one or more servers and/or computing devices hosting the annotation unit 122, the target data generator 114 and/or state detector 118, and/or to the user devices 116, 124 via the one or more computer networks 120. The computer network(s) 120 may be public or private network(s), or a combination thereof. A communication interface of each device connected to the network(s) 120 may be configured to connect to the network via appropriate devices and protocols, which may enable wired or wireless communication, as is known in the art.

The communications interface of each of one or more of the devices or networks 108, 110, 112, 114, 116, 118, 120, 122 and/or 124 may comprise a wireless communications interface comprising wireless technology configured to communicate with the other computing device(s) via a wireless communication channel (e.g., a short-range wireless/near field wireless technology, Bluetooth^{®}, Wi-Fi, ZigBee^{®}, etc.). The wireless communication components of the communication interface may include radio transmitting and receiving circuitry, an antenna, and a processor for instance, configured to communicate using a wireless transmission scheme, such as, for example, BLE. The wireless communication interface may be operable to communicate over a number of wireless frequencies or schemes. As such, the processor, radio, and antenna of the communications interface could be configured to communicate over multiple wireless communication technologies, such as, for example, BLE and Wi-Fi. The communications interface may alternatively or in addition comprise an interface for wired communication with one or more other computing device(s). The wired communications interface may comprise any wired communication technology capable of transferring electronic data (e.g., Ethernet, CANbus, RS232, USB, USB-C or the like).

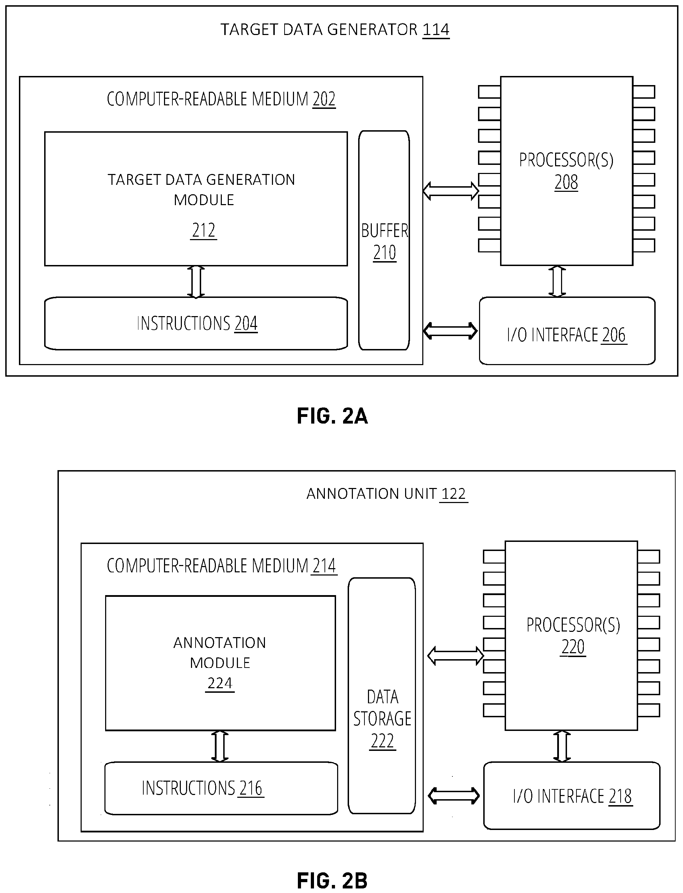

Referring to FIG. 2A, in a preferred embodiment, the target data generator 114 comprises one or more processor(s) 208 and a computer-readable medium or media 202 having stored therein instructions 204 to be executed by the processor(s) 208, for generating or determining the target data. The instructions 204 may be stored in non-volatile or non-transitory memory location or medium of the computer-readable medium or media 202. The target data generator 114 further comprises an I/O interface 206 for receiving the monitoring data from one or more of the monitoring sensor(s) 108, 110, 112, and for receiving status information relating to an industrial asset 102, 104, 106 from the state detector 118. The I/O interface may comprise a wired or wireless communication interface as mentioned above for enabling the reception of data from external devices, such as the monitoring devices, state detector 118 and/or the operator device 116, and for enabling the output and transmission of data to other external devices, such as the operator device 116 and/or a model generation device.

The computer-readable medium 202 comprises a target data generation module 212 and one or more storage buffer(s) 210 which may be populated with target data generated or determined by the target data generation module 212 based on data indicative of detection of a target state by the state detector 118. The storage buffer(s) 210 may comprise a volatile or transitory storage medium or media for temporary storage of data. The target data generator 114 is then configured to transmit the target data populated in the storage buffer(s) 210 to the annotation unit 122 or another memory location, unit, or device, such as a different volatile memory location or medium and/or a non-volatile or non-transitory memory location or medium. The buffer(s) 210 is(are) cleared after transmission and re-populated with additional target data generated or determined by the target data generation module 212 based on data indicative of detection of another instance of the target state by the state detector 118, for instance. In some embodiments, the memory/storage capacity of the buffer(s) 210 may be fixed or static. In other embodiments, the memory/storage capacity of the buffer(s) 210 may be adjustable or dynamic.

Referring to FIG. 2B, in a preferred embodiment the annotation unit 122 comprises one or more processor(s) 220 and a computer-readable medium or media 214 having stored therein instructions 216 to be executed by the processor(s) 220, for facilitating annotation, e.g., labeling, of received target (pre-annotated) data. The instructions 216 may be stored in non-volatile or non-transitory memory location or medium of the computer-readable medium or media 214. The annotation unit 122 further comprises an I/O interface 218 for receiving the target data from the target data generator 114, and optionally for receiving annotation information from an annotator (via a user device 124, for instance). The computer-readable medium or media 214 comprises a target data storage 222 medium or location for storing the received target data. The I/O interface may comprise a wired or wireless communication interface as mentioned above, for enabling the reception of data from external devices, such as the annotation device 124 and/or the target data generator 114, and for enabling the output and transmission of data to other external devices, such as to the annotation device 124. Other instructions 216 may be stored in the computer readable medium or media 214 for performing other functions, such as pre-processing of the target data received, prior to annotation of the data. Pre-processing functions may include, for instance, one or more of: quantization, compression, calibration, scaling, noise reduction, normalization, data integration (merging of disparate data sources), timestamping, identification or recording of meta-data, and identifying and discarding, correcting, or compensating for low quality data acquired from the monitoring sensor(s). It will be appreciated that, one or more of these processing functions may be performed post generation of the data to be annotated, or it may be performed alongside annotation.

In some embodiments, computer-readable medium 214 comprises an annotation module 224. In some embodiments, the target data storage medium or location 222 may be on a separate device to the annotation unit 122, but accessible by the annotation unit 122. In such an embodiment, the target data generator 114 is communicatively coupled to the separate device comprising the target data storage medium or location 222, via a communications interface as mentioned above, to store the generated or determined target data.

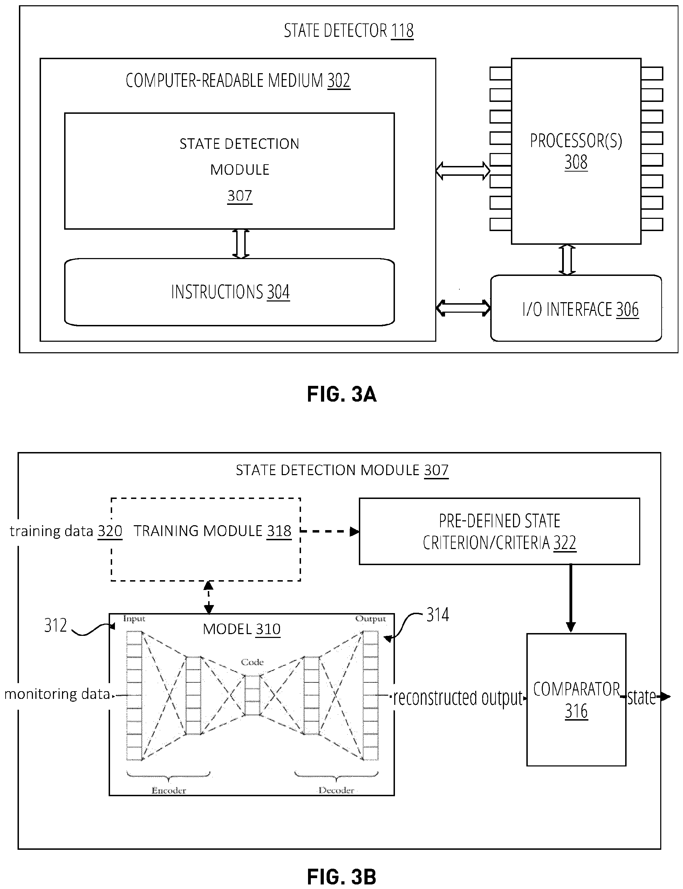

Referring to FIG. 3A, in a preferred embodiment, the state detector 118 comprises one or more processor(s) 308 and a computer-readable medium or media 302 having stored therein instructions 304 to be executed by the processor(s) 308, for identifying or determining one or more states of an industrial asset 102, 104, 106. The instructions 304 may be stored in non-volatile or non-transitory memory location or medium of the computer-readable medium or media 302. The state detector 118 further comprises a state detection module 307 accessible by the processor(s) 308 during execution of instructions 304. The state detector 118 further comprises an I/O interface 306 for receiving the first monitoring data indicative of data output from one or more of the monitoring device(s) 108, 110, 112, and/or for receiving training data from the operator device 116 or another device. The I/O interface 306 may comprise a wired or wireless communication interface as mentioned above for enabling the reception of data from external devices, such as the monitoring devices, the operator device, and/or a machine interface of the industrial asset, and for enabling the output and transmission of data to other external devices, such as the target data generator 114. Other instructions 304 may be stored in the computer readable medium or media 302 for performing other functions, such as pre-processing of raw monitoring device data received by the state detector 118, prior to state detection. Pre-processing functions may include, for instance, one or more of: quantization, compression, calibration, scaling, noise reduction, normalization, data integration (merging of disparate data sources), timestamping, identification or recording of meta-data, and identifying and discarding, correcting, or compensating for low quality data acquired from the monitoring device(s).

Referring to FIG. 3B, the state detection module 307 comprises at least one mathematical model 310 that is configured to identify or detect an instance of a state of an industrial asset 102, 104, 106 based on received first monitoring data. In some embodiments, the mathematical model 310 comprises a machine learning model, such as a NN 310 as previously described. The model 310 is configured to determine a state of an industrial asset 102, 104, 106 based on first monitoring data associated with the industrial asset 102, 104, 106 of the system 100. As previously mentioned, the model may be trained using a training module 318, to enable the model 310 to identify one of multiple states of the associated industrial asset 102, 104, 106. The model 310 may be trained using a supervised, non-supervised, or self-supervised approach, or any combination thereof. Examples of suitable models that may be utilized by the state detector 118 include: ANNs (such as autoencoders), CNNs, RNNs, Dynamic Time Warping models, clustering models, and BERT models.

In some embodiments, the model may comprise an autoencoder 310. The autoencoder 310 may be configured to receive one or more monitoring data inputs 312 indicative of the first monitoring data associated with a respective one of the industrial assets 102, 104, 106, encode the monitoring inputs using a layered approach and predefined compression technique, and then decode the encoded monitoring inputs using a layered approach and predefined decompression technique. The output 314 of the autoencoder 310 is a reconstruction of the original monitoring inputs 312. The monitoring inputs 312 may indicate a state of the associated industrial asset 102. A comparator 316 may receive the output 314 and determine an error value or values representative of the difference between the reconstructed output 314 and monitoring input 312. The error value or values are compared against the predetermined pre-defined state criterion/criteria 322 to identify or determine a state of the associated industrial asset 102, 104, 106 based on the first monitoring data. In some embodiment, the comparator 316 may output data indicative of, or may detect, a pre-defined state (e.g., a normal state or an abnormal state) of the industrial process when the error value or values is (are) within or outside a predetermined criterion or criteria 322. For example, the predetermined criterion or criteria 322 may be indicative of a normal state of operation, and the comparator 316 may output data indicative of, or detect, the normal state of operation when the error value(s) is(are) meets the predetermined criterion/criteria. Alternatively, or in addition the comparator 316 may output data indicative of, or detect, an abnormal state of operation when the error value(s) is(are) outside the predetermined criterion/criteria. The predetermined criterion/criteria may comprise a maximum error value threshold. Alternatively, or in addition, the predetermined criterion/criteria may comprise a minimum error value threshold. Other techniques for determining whether the output 314 of the autoencoder 310 is within or outside the error threshold may be utilized in alternative embodiments, as would be apparent to the skilled person.

The model 310 may be trained using an unsupervised or self-supervised training approach. The state detection module 307 may comprise a training module 318 for training the mathematical model 310. Alternatively, the state detector 118 may comprise a training module 118, separate to the state detection module 307. In yet another alternative, the training module 318 may be part of a separate device or system, and a trained state detection module 118 may be received by and stored in memory 302 of state detector 118.

The training module 318 is configured to receive state detection training data 320 associated with the industrial asset 102, 104, 106. The state detection training data 320 may be, for instance, monitoring data that is associated with a predefined training state (e.g., one or more normal state(s) of operation) of a respective industrial asset 102, 104, 106. Where the model is an autoencoder 310, for instance, the training module 318 trains the autoencoder 310 based on the state detection training data 320 so that the autoencoder 310 is capable of generating a reconstructed output of the input that is within a predetermined target error threshold criterion/criteria. The output 314 data may comprise the same variables and/or parameters as the input 312. For instance, if the input 312 comprises multivariate time series data, then the output 314 also comprises corresponding multivariate time series data. Training of the autoencoder 310 may comprise adjusting the weight(s) of one or more nodes of one or more layers of the autoencoder 310 until the model converges such that a validation error is deemed adequate.

A predetermined target error threshold criteria/criterion may be associated with a particular state identifiable by the model 310. In this manner, the model 310 is trained to provide an indication of a pre-defined training state (e.g., normal state) for an industrial asset when the difference between the reconstructed output 314 and monitoring input 312 is within a target error threshold criterion/criteria. The model 310 may also (or alternatively) provide an indication of a state other than the predefined training state (e.g., anomalous/defective state) based on this training, when the difference is outside the target error threshold criterion/criteria. This other state may be the target state upon which target data is based or from which it is generated. Alternatively, the predefined training state may be the state upon which target data is based or from which it is generated.

The target error threshold criteria/criterion may comprise a maximum error threshold value. The target error threshold criterion or criteria may be predetermined based on the trained model 310 and/or the target application. A suitable mathematical/statistical approach may be implemented to determine the target error threshold criterion or criteria, such as Chebyshev's theorem. For instance, an error threshold may be defined by inputting data 312 representative of a target state (e.g., normal state of operation) associated with the error threshold into the trained model 310. A distribution of error from the model 310 is then determined by comparing the output 314 of the model 310 to its input 312. Based on the distribution, an error threshold is determined, which may be the same or slightly higher than the highest error identified in the distribution, for instance. The target error threshold criteria/criterion is stored as the pre-defined state criterion/criteria 322 and is utilized by the comparator 316 in conjunction with the output 314 of the model 310 to identify or detect a state of an industrial asset 102, 104, 106 based on monitoring input 312.

Reception of state detection training data 320 by the training module 318 may be initiated by an operator via the operator device 116 or another user device 124, for instance. During this stage, an operator may indicate a training period or periods in which an industrial asset of interest 102, 104, 106 is considered to be in a target training state (e.g., a normal state). Monitoring data indicative of data output from one or more of the corresponding monitoring devices 108, 110, 112 during the training period becomes the training data and may be received by the training module 318 of the state detection module 307 to train the model 310. An operator may indicate a commencement and termination of a training period which could correspond to a commencement and termination of receipt of state detection training data 320 by the training module 318. The state detection training data 320 may be received by the state detection module 307 directly from the corresponding monitoring device(s) 108, 110, 112 or alternatively, the data 320 may be received via an intermediate source, such as the operator device 116 or another user device 124. The monitoring data received during the training period or periods may be pre-processed to generate the state detection training data 320. The pre-processing may be performed by the operator device 116 or the state detector 118, for instance.

In some embodiments, the state detection module 307 may not comprise a training module 318. The training module 318 may alternatively be associated with a separate state detection generation system or device. The separate state detection generation system or device may train a state detection module for a type of industrial asset as described above, and the state detector 118 may receive a trained state detection module 307 from the state detection generation system or device for a corresponding industrial asset 102, 104, 106, and store the trained state detection module 307 in memory 302.

In the case where the state detector 118 is configured to detect one of two states, such as a normal state and an anomalous/defective state of a first industrial asset 102, 104, 106, for example, the model 310 may be trained using state detection training data 320 representative of a normal state of an industrial asset of interest (the normal state being the predefined training state in this instance). The training module 318 trains the model 310 using the state detection training data 320 and sets the target error threshold criteria/criterion. During operation, when first monitoring data of the same or similar industrial asset 102, 104, 106, is input into the model 310, the output 314 will provide an indication of whether the input monitoring data is sufficiently similar to that expected for a normal state. The output 314 may be compared to a predetermined output representative of the predefined training state (e.g., normal state), and an error value or values may be determined based on the comparison. An error threshold criterion or criteria may be predefined and used to indicate if the difference between the output 314 and the predetermined output for the predetermined state is within the threshold criterion or criteria, indicating that the monitoring input 312 is representative of the predefined training state (e.g., normal state), or outside the threshold criterion or criteria, indicating that the monitoring input 312 is representative of another state (e.g., anomalous/defective state) which may be the target state for generating the target data.

As mentioned, in some embodiments, the state detector 118 may be further configured to detect one or more other predefined states associated with an industrial asset or process, including, for instance, one or more of: an operation commencement state; an operation suspension state; an operation resumption state; an operation termination state; and/or an operation transition state. In such embodiments, the state detector 118 may be based on or comprise one or more models 310 that is(are) configured to detect or identify more than two predefined states of operation. Suitable types of models include ANNs (such as autoencoders), CNNs, RNNs, Dynamic Time Warping models, clustering models, Principal Component Analysis (PCA) and BERT models. In one embodiment, for each of the abovementioned predefined states, an autoencoder model is trained to detect the corresponding state. Each model may be trained based on monitoring data acquired during each of respective states of operation of the industrial asset 106, 108, 110 or of a similar asset. For example, an autoencoder may be trained to detect an operation commencement state based on monitoring data acquired during the operation commencement state. A second autoencoder may be trained to detect an operation suspension state based on monitoring data associated with the operation suspension state, and so forth. The state detector 118 may therefore comprise of multiple models 310, each configured and trained to detect one or more states of an industrial asset or process. Alternatively, a single model may be trained with the normal state of operation having multiple sub-state, including, for example: operation commencement, operation running, operation suspension and so forth. The training technique for each model 310 may be unsupervised or self-supervised.

In each of the embodiments described above, the model 310 may be retrained, or periodically or intermittently retrained using new monitoring data indicative of data output from the same type of monitoring device(s) or the same source(s) 108, 110, 112. The training data may comprise target data acquired from a target data generator of a same or similar industrial asset.

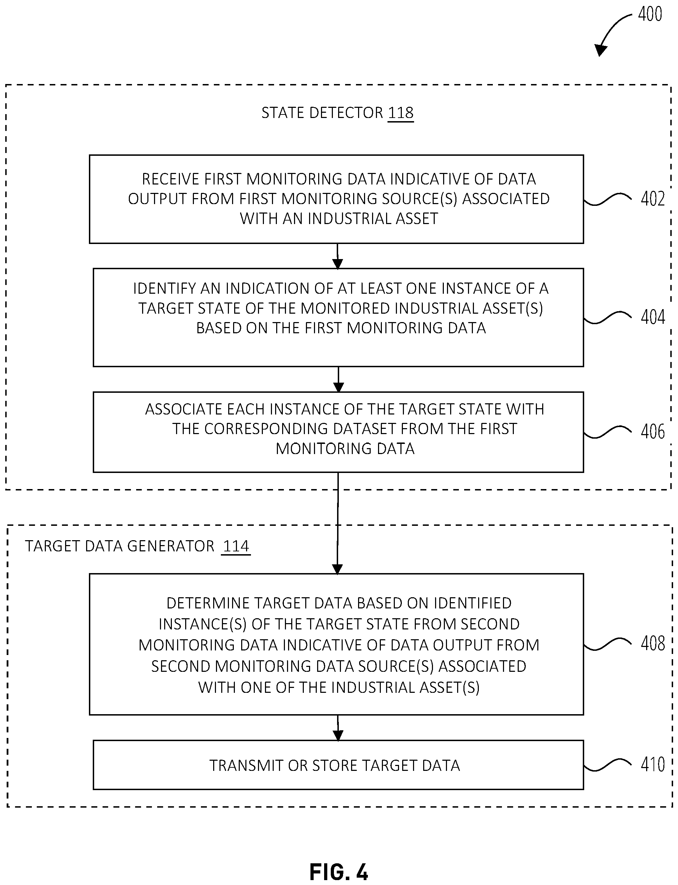

Embodiments of methods of the invention, which may be carried out by or in association with an industrial system 100, will now be described with reference to FIGs. 4-7. Referring to FIG. 4, a computer-implemented method 400 for generating or determining target data in accordance with an embodiment of the invention is shown. The method 400 comprises initially monitoring an industrial asset 102, 104, 106 of interest within the system 100 at stage 402, by receiving first monitoring data indicative of data output from one or more monitoring device(s) 108, 110, 112. The first monitoring data may be received in real time or near real time as data is being collected or produced by the corresponding monitoring device(s) 108, 110, 112. Alternatively, the first monitoring data may be based on data collected and stored in batches, and then the first monitoring data may be received in batches at stage 402. A batch of data may comprise a video frame consisting of multiple images, for instance.

The first monitoring data received at stage 402 comprises data corresponding to monitoring device type(s) or source(s) that is(are) associated with state detection by the state detector 118 of the system 100. The first monitoring data may comprise a time-series dataset indicative of one or more monitored variables associated with an industrial asset 102, 104, 106. Accordingly, the first monitoring data may comprise an indication of time intervals associated with the collection of data from the corresponding monitoring device(s) 108, 110, 112. In the case where the first monitoring data is indicative of data output from multiple monitoring devices or sources, the monitoring data may comprise a multivariate dataset, and in some embodiments a multivariate time-series dataset. The first monitoring data may comprise or may be indicative of one or more "quantitative" dataset(s), indicative of operating variables associated with the industrial assets 102, 104, 106 that are objective, measurable and/or quantifiable using one or more of the monitoring device(s) 108, 110, 112. The quantitative dataset preferably comprises numerical data. Examples of such variables include, but are not limited to: current (average data being indicative of mean, RMS, peak, base, frequency, duty cycle, instantaneous value etc.), voltage (data being indicative of mean, RMS, peak, base, frequency, duty cycle, instantaneous etc.), resistance, ambient temperature, base material temperature, localized material or tool temperature, gas, liquid, powder or mass flow rate (including wire feed speed e.g. m/min and any variations with respect to time), optical power as related to laser applications (including focal plane beam dimension and distribution, and variations with respect to time (e.g. pulse), encoder pulse (as related to the motion of an axis or spindle or other motion variable), geometrical feature dimensions (as related to one, two or three dimension cameras and/or sensors) and analysis (e.g. peak, average, spread) as related to sound, vibration or electromagnetic spectra.

At stage 404, an indication of at least one instance of a target state of the monitored industrial asset is identified or determined based on the received first monitoring data, preferably using the state detection model 310. The indication of the target state may be an indication of an anomalous or defective state of the associated industrial asset 102, 104, 106, for instance. This state detection model 310 may identify or detect the target state when the first monitoring data substantially deviates from predetermined values indicative of a predefined reference state. The predefined reference state may be a normal state of the associated industrial asset 102, 104, 106, for example. The state detection model 310, which may be an autoencoder as described for system 100, is used to identify or detect the target state based on the received first monitoring data. The model 310 may be trained or have been previously trained using monitoring data indicative of data output from the same type of monitoring device(s) 108, 110, 112, of the same or similar industrial asset. The monitoring data used for training the model 310 may correspond to the predefined reference state, also referred to as a predefined training state in this specification.

At stage 404 one or more instances of the target state may be identified or determined based on the first monitoring data received at stage 402. Each instance of the target state may be identified or determined in real time, during collection of monitoring data from the corresponding monitoring device(s) 108, 110, 112 in some embodiments. Alternatively, or in addition, one or more instances may be identified or determined post-collection of monitoring data from the corresponding monitoring device(s) 108, 110, 112. A monitoring dataset, which may be a subset of the first monitoring data received at stage 402, is associated with each instance of the target state at stage 406. One or more time-related parameters may be additionally or alternatively associated with the instance of the target state at stage 406, including for example, one or more of: a commencement time or time interval of the instance of the target state, a termination time or time interval of the instance of the target state, and/or a time period of the instance of the target state.

In some embodiments, the first monitoring data may be received at stage 402 and then processed at stage 404 to identify or detect an indication of an instance of the target state in real time (i.e., during collection of the monitoring data from the corresponding monitoring devices 108, 110, 112 and during operation of the corresponding industrial asset 102, 104, 106). In some embodiments, the first monitoring data may be received at stage 402, after terminating collection of monitoring data from the corresponding monitoring device(s) 108, 110, 112 and/or terminating operation of the industrial asset 102, 104, 106 and processed at stage 404 upon receipt and/or processed upon receiving a command to identify or detect an instance of a target state from received first monitoring data. The command may be received from the target data generator 114 for instance.

In some embodiments, at stage 404 one or more instances of two or more different pre-defined states may be identified or detected based on the first monitoring data. For example, one or more of the following predefined states may also be identified or detected based on the received first monitoring data: an operation commencement state; an operation suspension state; an operation resumption state; an operation termination state; and/or an operation transition state associated with the monitored industrial asset 102, 104, 106. The state detection model 310 may be trained or otherwise pre-configured to identify or detect instances of these additional states. The instance of a particular state is associated with the corresponding monitoring dataset and/or with one or more time-related parameters as mentioned above, at stage 406. Stages 402 - 406 may be carried by the state detector 118 of the industrial system 100. As mentioned, the target data generator 114 may comprise the state detector 118, or alternatively the state detector 118 may be a separate device or operable on a separate device.

At stage 408, target data is generated or determined, based on identification or determination of the target state and in particular, based on each instance of the target state. In this specification, determining the target data or generating the target data can mean receiving the target data, collecting the target data, identifying the target data, processing to derive the target data, or any combination of the foregoing. The target data is also determined based on second monitoring data received in association with the same or another industrial asset 102, 104, 106 of the system 100, and corresponding in time with the instance of the target state. The target data may therefore be also determined or generated based on the time-related parameters associated with the instance of the target state.

The second monitoring data of stage 408 may be indicative of data output from from a first monitoring device, or a first set of monitoring devices that are the same or the same type as those associated with state detection stages 402 - 404. The second monitoring data associated with stage 408 may comprise a time-series dataset indicative of one or more monitored variables associated with an industrial asset 102, 104, 106. Accordingly, the second monitoring data may comprise an indication of time intervals associated with the collection of the monitoring data from the corresponding monitoring device(s) 108, 110, 112. In the case where the second monitoring data corresponds to data output from multiple monitoring devices, the monitoring data may comprise a multivariate dataset, and in some embodiments a multivariate time-series dataset. The second monitoring data may comprise or may be indicative of one or more "quantitative" dataset(s), indicative of operating variables associated with the industrial assets 102, 104, 106 that are objective, measurable and/or quantifiable using one or more of the monitoring device(s) 108, 110, 112. The quantitative dataset may comprise numerical data. Examples of such variables include, but are not limited to: current (average data being indicative of mean, RMS, peak, base, frequency, duty cycle, instantaneous value etc.), voltage (data being indicative of mean, RMS, peak, base, frequency, duty cycle, instantaneous etc.), ambient temperature, base material temperature, localized material or tool temperature, gas, liquid, powder or mass flow rate (including wire feed speed e.g. m/min and any variations with respect to time), optical power as related to laser applications (including focal plane beam dimension and distribution, and variations with respect to time (e.g. pulse), encoder pulse (as related to the motion of an axis or spindle or other motion variable), geometrical feature dimensions (as related to one, two or three dimension cameras and/or sensors) and analysis (e.g. peak, average, spread) as related to sound, vibration or electromagnetic spectra.

The second monitoring data may additionally comprise or may be additionally indicative of one or more "qualitative" datasets, such as image, video, audio and/or spectral data that indicate more subjective and complex measures or observations relating to the industrial assets 102, 104, 106, acquired via one or more monitoring devices 108, 110, 112. Alternatively, the second monitoring data comprises or is indicative of one or more qualitative datasets only, such as image, video, audio and/or spectral data.

The second monitoring data may be pre-processed or pre-manipulated by the associated monitoring device 108, 110, 112, prior to being received at stage 408.

In any of the mentioned embodiments, the one or more received datasets may be synchronized in time so that datasets corresponding to a real-time time period are synchronized with other datasets corresponding to the same real-time time period. In an embodiment where the monitoring data comprises one or more quantitative dataset(s), where data is acquired at a sampling rate of 12 kHz for instance, and one or more qualitative, time-series dataset(s), such as video data acquired at 30 frames per second, the qualitative dataset(s) may be synchronized in time with the time-series dataset(s) so that the datasets correspond to the same real-time time periods, e.g., by associating 400 consecutive samples with each video frame.

In a preferred embodiment, the second monitoring data associated with stage 408 comprises monitoring data indicative of data output from one or more monitoring device(s) that differ in type to those associated with the first monitoring data for state detection at stages 402 and 404. This may be in addition to monitoring data that is indicative of data output from the first monitoring device(s) in some embodiments. Exemplary monitoring device(s) that may not have been utilized for state detection stages 402 and 404 in some embodiments, but that may be useful for generating target data, include qualitative data capture devices or data sources, such as image and video capture devices or sources. The monitoring data associated with stages 402 and 404 may include quantitative data only (as exemplified above) in such embodiments. The second monitoring data associated with stage 408 may also comprise one or more of such quantitative data.

In some embodiments, the monitored industrial asset 102 associated with state detection stages 402 and 404 is the same as the industrial asset 102 associated with target data generation stages 408 and 410. In other embodiments, the monitored industrial asset 102 associated with state detection stages 402 and 404 differs from the industrial asset 104 associated with target data generation stages 408 and 410 but is preferably part of the same industrial system 100 and cooperatively functions to achieve a target result or function. As an example, the industrial asset 104 may be downstream of the asset 102 but part of the same industrial process. For instance, in a welding application, the asset 102 that may be monitored for state detection could be an object to be welded to another, and the asset 104 could be the finished product including the welded joint. The welding process is monitored by monitoring the first asset 102, and target data associated with the second asset 104 may be generated for assessment of the welded joint.

In some embodiments, one or more datasets of the generated or determined target data are each associated with a corresponding instance or instance(s) of the target state. In some embodiments, the dataset is associated with corresponding instance or instance(s) of one or more predefined states identified or detected by the state detection stages 402 and 404. In some embodiments, the dataset is associated with one or more time related parameters corresponding to the one or more instance(s) of the target and/or predefined state(s), including, for example: a commencement time or time interval of each associated instance of the target state (and/or other predefined state), a termination time or time interval of each associated instance of the target state (and/or other predefined state), a time period of each associated instance of the target state (and/or other predefined state).

In some embodiment, at stage 408, the target data is generated by initiating collection and/or receipt of second monitoring data indicative of data output from one or more monitoring device(s) 108 associated with the industrial asset 102, based on the identification or detection of the target state. For example, the target data generator 114 may receive an indication of detection of a target state from the state detector 118, and accordingly may initiate receipt or storage of second monitoring data indicative of data output from the one or more monitoring device(s) 108, such as the image or video capture devices, associated with industrial asset 102. This may continue until an indication to cease receipt/storage is received by the target data generator 114. This may be the termination of the detected instance of the target state, for example. The target data generator 114 may also trigger the one or more monitoring device(s) to collect data corresponding to the second monitoring data upon receiving the indication of detection of the target state. This may continue until an indication to cease collection is received by the target data generator 114, which may be termination of the detected instance of the target state.

In some embodiments, at stage 408, the target data is determined based on received second monitoring data that is pre-stored in memory associated with the target data generator 114 (e.g., computer-readable medium or media 202), for example. The target data is determined by extracting or identifying one or more datasets from the second monitoring data that correspond to the one or more instances of the target state identified by the state detector 118. The extracted or identified dataset may be based on the one or more time-related parameters associated with the instance of the target state. For instance, a commencement time or time interval and a termination time or time interval (or other similar parameters) associated with an instance of the target state, may define the beginning and end of a dataset extracted from the second monitoring data. Some or all of the second monitoring data stored in memory may be processed in this manner to determine the target data which may comprise one or more monitoring datasets, and optionally one or more time-related parameters associated therewith.

In some embodiments, for at least one instance of a detected target state, the corresponding target data comprises received second monitoring data that is associated with a time period immediately preceding the commencement time of the at least one instance. This data may be associated with another identified or detected state, such as a transitional state between a preceding state and the target state. The corresponding target data may alternatively, or in addition, comprise received second monitoring data that is associated with a time period immediately succeeding the termination time of the at least one instance. This data may be associated with another identified or detected state, such as a transitional state between the target state and a succeeding state. This data may be useful in the application of training a ML model to predict the commencement or termination of the target state, for instance.

At stage 410, the target data may be stored in memory or transmitted to another device, such as the annotation unit 122, for annotation, and/or for training or evaluating the performance of a ML model associated with the system 100 or a similar system. Stages 408 and 410 may be carried out by the target data generator 114, in preferred embodiments.

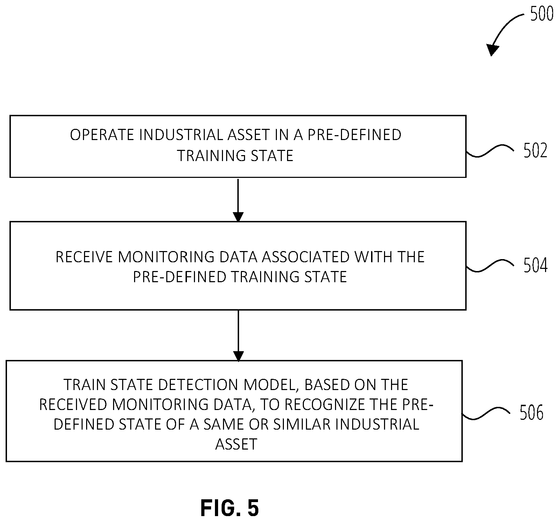

Referring to FIG. 5, an exemplary computer-implemented method 500 for training a state detection model, such as the model 310 of the state detector 118, in accordance with an embodiment of the invention is shown. The model may be an autoencoder 310 that may be trained to identify or determine monitoring data that is indicative of a predefined state, such as a normal state. Accordingly, the trained model 310 can be used to identify or determine monitoring data that is indicative of a state other than the predefined state, such as an abnormal, anomalous, or defective state. The model 310 may be further trained to identify or determine monitoring data that is indicative of other states (in addition to the normal and abnormal states), or another model may be trained using a similar technique as described herein to identify these other states, including for instance: an operation commencement state; an operation suspension state; an operation resumption state; an operation termination state; and/or an operation transition state.

The method 500 comprises initially operating an industrial asset of interest 102, 104, 106 in a pre-defined training state at stage 502. This predefined training stage may be a normal state of operation as mentioned above, for instance, where the outcome and/or result of the corresponding industrial asset 102, 104, 106 is as expected or desired. Accordingly, prior to stage 502, an operator may commence operation of the industrial asset 102, 104, 106 and may send data to the training module 318 to indicate commencement of the predefined training state. Alternatively, monitoring data associated with a pre-defined period of operation of an industrial asset 102, 104, 106, may be received by an operator device 116 and an operator may select a segment or segments of this data that represent the predefined training state, e.g., a normal state of operation. At stage 504, monitoring data associated with training of the state detection model 310, is obtained and received from corresponding monitoring device(s) 108, 110, 112 or the operator device 116. This monitoring data is then used to train the state detection model 310 at stage 506 such that a target state of a same or similar industrial asset, to the industrial asset of interest, may be identified or determined based on the same type of corresponding monitoring data using the state detection model 310.

The monitoring data associated with training the state detection model 310 may be received in real time or near real time as it is being collected by the corresponding monitoring device(s) 108, 110, 112. Alternatively, the monitoring data may be collected and stored in batches or segments, and then received in batches or segments at stage 504. The monitoring data may comprise a time-series dataset. Accordingly, the monitoring data may be time-stamped and/or comprise an indication of time-related parameters associated with the collection of the monitoring data from the corresponding monitoring device(s). Indications of the start and finish of monitoring data for training may be received with the monitoring data, for instance. The monitoring data may be annotated by an operator in other ways, e.g., to indicate the predefined state of operation (in this exemplary embodiment, the normal state).

The monitoring data received at stage 504 comprises data corresponding to monitoring device type(s) that is(are) associated with state detection by the state detector 118 of the system 100. The monitoring data associated with stage 504 may comprise a time-series dataset indicative of one or more monitored variables associated with an industrial asset 102, 104, 106. Accordingly, the monitoring data may comprise an indication of time intervals associated with the collection of the monitoring data from the corresponding monitoring device(s) 108, 110, 112. In the case where the monitoring data corresponds to multiple monitoring devices, the monitoring data may comprise a multivariate dataset, and in some embodiments a multivariate time-series dataset. The monitoring data may comprise one or more "quantitative" dataset(s), indicative of operating variables associated with the industrial assets 102, 104, 106 that are objective, measurable and/or quantifiable using one or more of the monitoring device(s) 108, 110, 112. The quantitative dataset preferably comprises numerical data. Examples of such variables include, but are not limited to: current (average data being indicative of mean, RMS, peak, base, frequency, duty cycle, instantaneous value etc.), voltage (data being indicative of mean, RMS, peak, base, frequency, duty cycle, instantaneous etc.), ambient temperature, base material temperature, localized material or tool temperature, gas, liquid, powder or mass flow rate (including wire feed speed e.g. m/min and any variations with respect to time), optical power as related to laser applications (including focal plane beam dimension and distribution, and variations with respect to time (e.g. pulse), encoder pulse (as related to the motion of an axis or spindle or other motion variable), geometrical feature dimensions (as related to one, two or three dimension cameras and/or sensors) and analysis (peak, average, spread) as related to sound, vibration or electromagnetic spectra.

In an embodiment, the monitoring data associated with stage 504 comprises quantitative datasets only. In other embodiments, the monitoring data for training or retraining the state detection model may additionally comprise one or more "qualitative" datasets, such as image, video, audio and/or spectral data that indicate more subjective and complex measures or observations relating to the industrial assets 102, 104, 106, acquired via one or more monitoring devices 108, 110, 112. For instance, once a model 310 has been sufficiently trained to target degree of accuracy/level of performance, qualitative datasets may be used to trigger collection of other monitoring data. In some embodiments, the monitoring data associated with stage 504 comprises one or more qualitative datasets only, such as image, video, audio and/or spectral data.

The monitoring data may be pre-processed or pre-manipulated by the associated monitoring device 108, 110, 112, prior to being received at stage 504.

In any of the mentioned embodiments, the one or more received datasets may be synchronized in time so that datasets corresponding to a real-time time period are synchronized with other datasets corresponding to the same real-time time period. In an embodiment where the monitoring data comprises one or more quantitative time-series dataset(s), where data is acquired at a sampling rate of 12 kHz for instance, and one or more qualitative dataset(s), such as video data acquired at 30 frames per second, the qualitative dataset(s) may be synchronized in time with the time-series dataset(s) so that the datasets correspond to the same real-time time periods, e.g., by associating 400 consecutive samples with each video frame.

Method 500 may be used to train the same model 310 or a different model associated with state detector 118 to identify one or more other target states of operation, such as: an operation commencement state; an operation suspension state; an operation resumption state; an operation termination state; and/or an operation transition state. At step 502 the industrial asset would be operated in a pre-defined training state corresponding to the target state of operation, and the model trained based on the monitoring data obtained during this stage of operation.

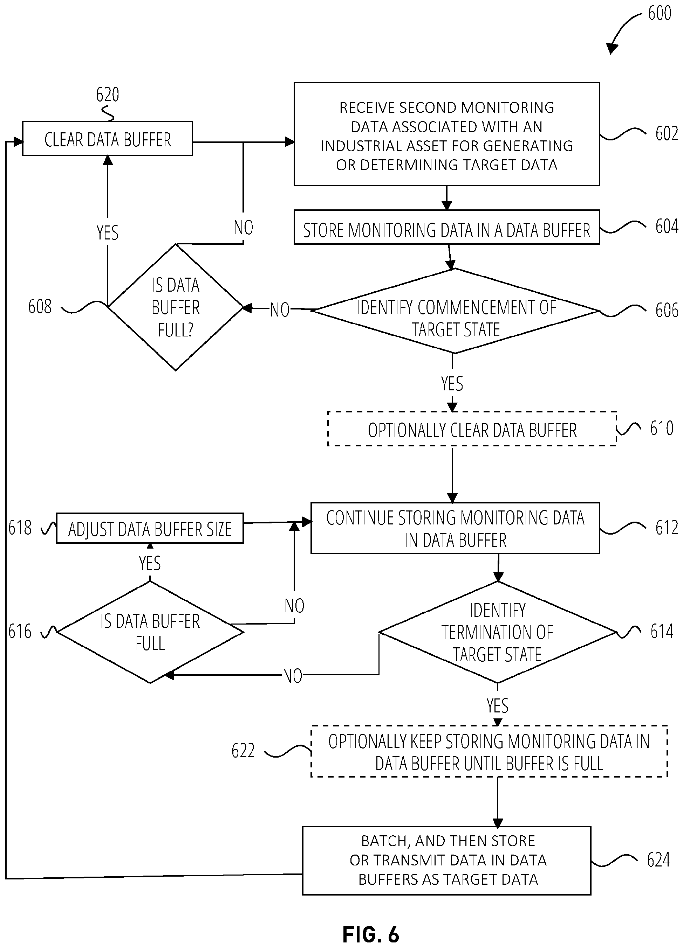

Referring to FIG. 6, an exemplary method 600 for determining or generating the target data in accordance with an embodiment of the invention is shown. At stage 602, second monitoring data associated with an industrial asset 102, 104, 106 is received, for instance by the target data generator 114. The second monitoring data is received as a dataset indicative of data output from the corresponding monitoring device(s), e.g., 108, of the industrial asset of interest, e.g., 102. The second monitoring data is stored in a data buffer 210 associated with the computer-readable medium or media 202 of the target data generator 114 as, or after, it is received.

Simultaneously, and preferably in real time, the state detector 118 receives corresponding first monitoring data for detecting an instance of a target state of the same industrial asset, e.g., 102, or an associated industrial asset or asset(s), e.g., 104, 106. The first monitoring data received by the state detector may comprise a selection of the variable(s) associated with the first monitoring data, e.g., one or more time-series datasets. If no instance of the target state is identified (decision stage 606), the data buffer continues to be populated with the first monitoring data until it is full. If the data buffer 210 is full and no indication of an instance of the target state is detected (decision stage 608) the buffer is cleared at stage 620. Otherwise, the target data generator 114 continues to store received second monitoring data in the data buffer 210.

When an instance of the target state is identified by the state detector 118 and an indication of such is received by the target data generator 114 (decision stage 606), the data buffer may be optionally cleared at stage 610 first to delete monitoring data that is not associated with the target state, and then the buffer is populated with second monitoring data (stage 612), until a termination of the instance of the target state is identified by the state detector 118 and an indication of such is received by the target data generator 114.

In some embodiments, the data buffer is not cleared when the instance of the target state is detected so the target data comprises second monitoring data associated with a period immediately preceding the instance of the target state. In some embodiments, if the data buffer 210 is full prior to detection of the termination of the target states (decision stages 612 and 614), the buffer size is adaptively adjusted/increased (stage 618) to allow for additional storage of second monitoring data. The size may be incrementally increased as stages 612-618 are cycled. A maximum buffer size threshold may be pre-allocated by the target data generator 114 and when this maximum buffer size is reached, the second monitoring data stored in the data buffer may be relocated into a different memory location and/or sent to a different device or unit, such as the ANN trainer 122. The buffer size may restore to an original size after it has been cleared. The data buffer is thereby cleared and subsequently repopulated with new second monitoring data as per step 612.

Alternatively, if the buffer size is not dynamically adjustable then the second monitoring data stored in the data buffer may be relocated into a different memory location and/or sent to a different device or unit, such as annotation trainer 122, when the original buffer size is fully populated. The data buffer is thereby cleared and subsequently repopulated with new second monitoring data as per step 612.

When an indication of termination of the instance of the target state is received (decision block 614) the second monitoring data stored in the data buffer 210 (and any other monitoring data transferred to another memory location as mentioned) is stored in memory and/or transmitted to another device or unit, such as the annotation unit 122. Optionally, the data buffer 210 may be fully populated even after detection of termination of the target state to include second monitoring data that immediately succeeds an instance of a target state to be included in the target data.

The second monitoring data associated with an instance of the target state is batched, and then either stored or transmitted as a target data batch associated with that particular instance of the target state. A batch of data may comprise multiple images acquired using an image capture device, or multiple frames of video data acquired using an image capture device, for instance. The batch may be associated with time-related parameters corresponding to that instance. This process is repeated for all second monitoring data received by the target data generator 114, and for each instance of the target state identified by the state detector 118, a batch of target data is determined/generated and stored for later processing.

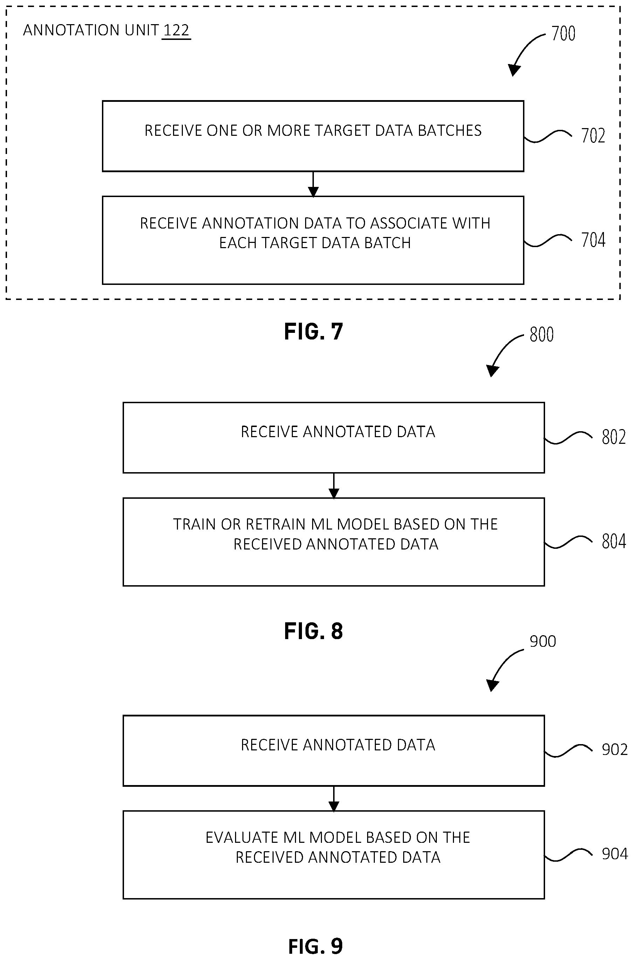

Referring to FIG. 7, an exemplary computer-implemented method 700 for annotating the target data determined or generated using the target data generator 114 and/or methods 400 and/or 600 of the invention is shown. The method 700 may be performed by the annotation unit 122 of the system 100, for instance. At stage 702, the annotation unit 122 may receive one or more batches of target data, each associated with an instance of the target state. At stage 704, one or more annotations such as classification annotations, localization annotations or temporal annotations, are associated with the data to generate annotated data. The annotated data may be utilized in a variety of applications, including, for instance, to train or retrain a classification model, or to evaluate a model's performance. A single label may be associated with an entire batch, or multiple annotations or types of annotations may be associated with subsets of a batch dataset. Annotation may be performed by a machine learning algorithm in an unsupervised manner, in some embodiments. In some embodiments, the annotation unit 122 may alternatively or additionally provide an interface for enabling human annotator to annotate the data. For example, an annotator may access the annotation unit 122 interface via a user device 124 which may be communicatively coupled to the network 120. The annotator is generally a skilled person in the field of application of industrial system 100. The interface may allow the annotator to select a batch of target data, and accordingly review the second monitoring data captured within this batch. This second monitoring data may include qualitative

(e.g., image and/or video) data, and other associated quantitative data (e.g., operational data). The data may be presented to the annotator via a user-interface that facilitates in the review and annotation of the data. The interface may allow for various levels of review or the comparison of annotations with previous or other annotators' labels.

One or more annotations may be associated with the full batch of second monitoring data, or with subsets of the second monitoring data. In the application of a welding system 100, for instance, the annotations may comprise classification type labels including: lack of penetration, porosity, lack of fusion, missing seam, wire misfeed, arc initiation problems and burn through.

Referring to FIG. 8, an exemplary computer-implemented method 800 for training or retraining a ML model, such as a classification model, based on the annotated target data generated in method 700 is shown. At stage 802, the annotated target data from method 700 is received by a training module associated with a ML model or approach. The ML model may form part of a classification system, for instance, which may be used to control the operation of an industrial asset 102 of a similar industrial system 100. The ML model may comprise a neural network (NN), such as an Artificial NN (ANN), a Convolutional NN (CNN) or a Recurrent NN (RNN). The model may comprise a Bidirectional Encoder Representations from Transformers (BERT) based model. At stage 804, the ML model is trained or retrained using the annotated target data. The ML model may be trained or retrained based on a target outcome. The ML model may be trained based on annotated target data acquired from multiple industrial systems 100 to strengthen the accuracy of the model. The ML model and/or classification system may be used in the same or other similar industrial systems to control operation of the same or other similar industrial assets 102. Any method known in the art for training or retraining a ML model based on annotated training data may be implemented at stage 804, as would be understood by those skilled in the art.

Referring to FIG. 9, an exemplary computer-implemented method 900 for evaluating the performance of a ML model, such as a classification model, based on the annotated target data generated in method 700 is shown. At stage 902, the annotated target data from method 700 is received by an evaluation module associated with a ML model or approach. The ML model may form part of a classification system, for instance, which may be used to control the operation of an industrial asset 102 of a similar industrial system 100. The ML model may comprise a neural network (NN), such as an Artificial NN (ANN), a Convolutional NN (CNN) or a Recurrent NN (RNN). The model may comprise a Bidirectional Encoder Representations from Transformers

(BERT) based model. At stage 904, the performance of the ML model is evaluated using the annotated target data. The ML model may be evaluated based on a target outcome. The ML model may be evaluated based on annotated target data acquired from multiple industrial systems 100 to assess the transferability of the model. The ML model and/or classification system may be used in the same or other similar industrial systems to control operation of the same or other similar industrial assets 102. Any method known in the art for evaluating the performance of a ML model based on annotated data may be implemented at stage 904, as would be understood by those skilled in the art.

As the time the system 100 is running, the primary focus is to collect monitoring data representative of a target state, such as an anomalous state. However, it may also be beneficial to collect monitoring data associated with other states of an industrial asset 102, 104, 106, e.g., a normal state, to train a ML model or perform other post-annotation functions. The method(s) 800 and/or 900 may further comprise receiving (annotated or non-annotated) monitoring data representative of one or more states that are not associated with the target data described in the embodiments herein, e.g., target data indicative of a normal state of operation. The method(s) 800 and/or 900 may utilize this additional data to train/retrain and/or evaluate the performance of a ML model at stage 804 and/or 904 respectively. The monitoring data may be identified or determined using methods and systems/devices similar to those described for the target data described herein, e.g., using state detector 118 or similar. The monitoring data preferably comprises a same or similar dataset type(s) (e.g., time-series, multi-variate, qualitative and/or quantitative data) to the monitoring data associated with generating or determining the target data described herein. Furthermore, the reception of monitoring data representative of these one or more other states may be triggered by an operator and/or one or more other devices connected to system 100.

Although embodiments of the invention have been described in relation to generating or determining target data that may be subsequently annotated, in some embodiments the system 100, including the state detector 118 and data generator 114, may be configured to generate or determine target data for further processing, including creating a test data set for qualitative evaluation of a ML model or implementing a ML approach or system that does not necessitate annotation of data, such as an image-based anomaly detection ML system. In this configuration, the target data is generated or determined by the data generator 114 not for the purposes of use by an annotator or annotation unit 122, but rather by one or more other processing devices for facilitating other computational functions.

Embodiments described herein may be implemented by hardware, software, firmware, middleware, microcode, or any combination thereof. When implemented in software, firmware, middleware or microcode, the program code or code segments to perform the necessary tasks may be stored in a machine-readable medium such as a storage medium or other storage(s). A processor may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

In the foregoing, a storage medium may represent one or more devices for storing data, including read-only memory (ROM), random access memory (RAM), magnetic disk storage mediums, optical storage mediums, flash memory devices and/or other machine-readable mediums for storing information. The terms "machine readable medium" and "computer readable medium" include but are not limited to portable or fixed storage devices, optical storage devices, and/or various other mediums capable of storing, including, or carrying instruction(s) and/or data.

The various illustrative logical blocks, modules, circuits, elements, and/or components described in connection with the examples disclosed herein may be implemented or performed with a general purpose processor, a digital signal processor (DSP), an application specific integrated circuit (ASIC), a field programmable gate array (FPGA) or other programmable logic component, discrete gate or transistor logic, discrete hardware components, or any combination thereof designed to perform the functions described herein. A general-purpose processor may be a microprocessor, but in the alternative, the processor may be any conventional processor, controller, microcontroller, circuit, and/or state machine. A processor may also be implemented as a combination of computing components, e.g., a combination of a DSP and a microprocessor, a number of microprocessors, one or more microprocessors in conjunction with a DSP core, or any other such configuration.

The methods or algorithms described in connection with the examples disclosed herein may be embodied directly in hardware, in a software module executable by a processor, or in a combination of both, in the form of processing unit, programming instructions, or other directions, and may be contained in a single device or distributed across multiple devices. A software module may reside in RAM memory, flash memory, ROM memory, EPROM memory, EEPROM memory, registers, hard disk, a removable disk, a CD-ROM, or any other form of storage medium known in the art. A storage medium may be coupled to the processor such that the processor can read information from, and write information to, the storage medium. In the alternative, the storage medium may be integral to the processor.

One or more of the components and functions illustrated in the figures may be rearranged and/or combined into a single component or embodied in several components without departing from the invention. Additional elements or components may also be added without departing from the invention. Additionally, the features described herein may be implemented in software, hardware, as a business method, and/or combination thereof.

In its various aspects, the invention can be embodied in a computer-implemented process, a machine (such as an electronic device, or a general-purpose computer or other device that provides a platform on which computer programs can be executed), processes performed by these machines, or an article of manufacture. Such articles can include a computer program product or digital information product in which a computer readable storage medium containing computer program instructions or computer readable data stored thereon, and processes and machines that create and use these articles of manufacture.

The invention may be embodied in a local device or devices, and/or in a remote device or devices of a cloud computing or other networked system or platform.

Embodiments of the invention described herein remove barriers to deploying an intelligent target data collection system for AI applications by solving the following key challenges in the development of machine learning models.

### Imbalanced data set

Typically, in manufacturing and industrial contexts, faults, or deviations from a normal process of operation comprise a small fraction of the overall process. When a process is monitored by video, for instance, the resultant video stream creates a high volume of rich data, posing a data handling challenge in terms of processing and adequate storage space for such data compared to quantitative data. From an annotation (e.g., labeling) perspective, each video frame is a potential image and label pair, but the vast majority of frames represent the normal state and only a small subset represent anomalies that require analysis and annotation. This challenge is addressed by automating the collection of anomalous target data via the target data generator 114.

Furthermore, frames that represent anomalies also occur in sequence; one incident comprising many frames. Depending on the frame rate, one incident may generate 10 seconds(s), 100s, or even 1000s of image examples of a particular class. For example, video of a robotic welding process running at 8mm/s captured by a camera with a frame rate of 30 frames per second would yield at least 30 images for annotation, if the anomalies event were 8mm long. Thus, the possibility presents itself that these images could be annotated as a batch, if the batch can be defined and labeled with confidence. This challenge is addressed by automating the collection of batches of anomalous target data via the target data generator 114.

### Time and labor cost

Annotating images is inherently subjective compared to annotation of quantitative data. Examples of image and label pairs are typically expensive to create, often involving human annotators manually annotating images one-by-one. This time-consuming, labor-intensive task may be the job of machine learning engineers or data scientists, or, if the classes require no expertise to distinguish, the task may be outsourced to a workforce of external annotators. In the context of annotating anomalies within a manufacturing or industrial process, however, the task may require significant domain knowledge to distinguish the classes. Model accuracy is largely determined by the consistency of annotation, and typical methods to address inconsistent annotation include increasing the size of the data set or the number of annotators. However, these strategies are not practical when anomalous data is rare and when annotation requires domain expertise.

Moreover, an anomaly may be considered an imperfection, if the variation is within acceptable levels or tolerances, or a defect, if the variation is outside of the acceptable levels or tolerances, according to domain-specific standards. Some sensors (such as laser triangulation) may allow for direct in-process classification of an anomaly as defect or an imperfection, and in other cases this distinction poses a more challenging problem, which again highlights the need for domain expertise on the part of the annotator. Once annotated, the examples of various anomalies along with a representative set of the normal process (including or excluding imperfections) can be used to train, retrain, or evaluate the performance of the ML model.

The challenge is addressed by generating target data that may be easily reviewed, traversed, and annotated during or after the industrial process with the operator or engineer responsible for the process having a convenient method and opportunity to do so.

### Annotation Accuracy

The requirement to produce highly accurate annotated data is addressed by facilitating accurate annotation of defects (or other such target conditions) at the time of annotation by presenting independent sensor and/or machine data that is synchronized with the images/video to be annotated. This data may be processed into any easily digestible form, including quantitative data accompanied by accepted standards that delimit imperfections from defects, in order to build a robust annotation framework. This challenge is also addressed by automating the collection of anomalous data via the state detector 118 and allowing for batch annotation of data via the batching of pre-annotated target data using the target data generator 114.

The system and methods described herein support engagement with the annotation task that is episodic and can be done immediately as industrial problems occur or remotely at one's convenience.

An example implementation of the invention is described below in relation to a welding system and process.

The use of video monitoring of welding presents an opportunity to detect defects such as lack of penetration, porosity, lack of fusion, missing seam, wire misfeed, arc initiation problems and burn through. Persons with domain experience and understanding of the process can identify such defects from recorded video. Welding current and voltage data is collected, e.g., using some of monitoring devices of an asset in the process (e.g., MS 1 and MS2 of 108), in synchronization with video of the welding process acquired using other monitoring devices of the target asset (e.g., MS3 of 108). An autoencoder anomaly detection system, e.g., state detector 118, is trained using welding current and voltage data that is representative of the normal welding process, also acquired using the monitoring devices 108 (e.g., MS1 and MS2) of asset 102, or of another similar asset from the same or another welding system. When the autoencoder detects data that varies sufficiently from normal, the anomaly event is used by a target data generator 114 to trigger a recording action and save in a buffer, e.g., 210, a predetermined period, e.g., 10 seconds, of video data, including a second predetermined period, e.g., 10 seconds, corresponding to before the anomaly event, and a third predetermined period, e.g., 10 seconds, corresponding to after the anomaly event.

Once the video and sensor data deviating from normal has been recorded and designated as target data by generator 114, it may be accessible for annotation, e.g., via annotation unit 122. The annotator may use domain knowledge of how the welding defect visually appears in real life, synchronized measurements from key supporting sensors and/or synchronized machine data (e.g. electrical measurements, spectrometers, laser triangulation sensors, wire or powder feeding sensors, gas flow sensors, area, line or spot thermal sensors/pyrometers from other monitoring devices 108), suggestions from a machine learning algorithm and/or comparison with samples from previously annotated data set to annotate the data. Supporting data may also include data from subsequent nondestructive or destructive testing procedures.

When an anomalous event occurs, beginning and end frames of video are identified in order to batch label intermediate frames. The beginning and end points may be selected by way of a user interface that traverses the video or by a machine learning process. The internal sequence is verified for consistency by a video loop and/or a machine learning algorithm.

Guidance in the form of numerical measurements or summary statistics may be provided using synchronized sensor data and frames from video to simplify the labeling task.

The labeled data may then be used to train a ML model.

The foregoing description of the invention includes preferred forms thereof. Modifications may be made thereto without departing from the scope of the invention as defined by the accompanying claims.

## Claims

1. A computer-implemented method associated with a first industrial process or asset, comprising:
identifying an indication of a target state of the first industrial process or asset, or of a second industrial process or asset operatively associated with the first industrial process or asset, the identification of the indication of the target state being based on first monitoring data indicative of data output from first monitoring data source(s) associated with the first industrial process or asset or with the second industrial process or asset, and
determining or generating target data, based on the identified indication of the target state, from second monitoring data indicative of data output from second monitoring data source(s) associated with the first industrial process or asset.

2. A method as claimed in claim 1 wherein the step of determining or generating the target data is performed in response to identifying the indication of the target state.

3. A method as claimed in claim 1 or claim 2 wherein the step of identifying the indication of the target state comprises identifying an indication of an instance of the target state, wherein the step of determining or generating the target data comprises determining or generating the target data based on the second monitoring data indicative of data output from the one or more second monitoring data source(s) during a period corresponding to the instance of the target state.

4. A method as claimed in any one of the preceding claims wherein the first monitoring data comprises a time-series dataset.

5. A method as claimed in claim 4 wherein the first monitoring data comprises a multivariate time series dataset.

6. A method as claimed in any one of the preceding claims wherein the target data comprises image data associated with the first industrial process or asset.

7. A method as claimed in any one of the preceding claims wherein the target data comprises video data of the industrial process or asset.

8. A method as claimed in any one of the preceding claims wherein the first monitoring data source(s) comprises one or more first data source type(s), and the second monitoring data source(s) comprises one or more second data source type(s) that differ from the one or more first data source type(s).

9. A method as claimed in claim 8 wherein the target data comprises synchronized data indicative of data output from two or more data source(s) of the second data source type(s) and/or of the first data source type(s).

10. A method as claimed in any one of the preceding claims wherein identifying the target state is based on a state detection model, and the state detection model is configured to detect one of two states including the abnormal state and a normal state.

11. A method as claimed in any one of the preceding claims wherein identifying the target state is based on a state detection model, and the state detection model is trained based on initial training data, the initial training data being associated with a predefined training state of the first or second industrial process or asset, or a similar industrial process or asset, the predefined training state corresponding to a normal state of the first or second industrial process or asset, that differs from the target state.

12. A method as claimed in claim 10 or claim 11 wherein the state detection model comprises an autoencoder.

13. A method as claimed in any one of the preceding claims wherein the step of determining or generating the target data further comprises:
identifying indications of periods of commencement and termination of an instance of the target state of operation of the first or second industrial process or asset based on the first monitoring data, and
batching data indicative of data output from the second monitoring data source(s) during a continuous period between, and optionally including one or both of, the periods of commencement and termination of the instance of the target state of operation.

14. A computing apparatus comprising:
at least one processing component ("processor(s)"); and
at least one computer readable medium ("memory") having stored therein instructions that, when executed by the processor(s), configure the apparatus to:
identify an indication of a target state of a first industrial process or asset, or of a second industrial process or asset operatively associated with the first industrial process or asset, the identification of the indication of the target state being based on first monitoring data indicative of data output from one or more first monitoring data source(s) associated with the first or second industrial process or asset, and
determine or generate target data, based on the identified indication of the target state, from second monitoring data indicative of data output from one or more second monitoring data source(s) associated with the first industrial process or asset.

15. An industrial system comprising:
a first industrial asset, and optionally a second industrial asset, configured to perform an industrial process;
a computing apparatus having: at least one processing component ("processor(s)"); and at least one computer readable medium ("memory") storing instructions that, when executed by the processor(s), configure the apparatus to:
identify an indication of a target state of the first industrial asset or the second industrial asset from first monitoring data indicative of data output from one or more first monitoring data source(s) associated with the first industrial asset or the second industrial asset, and
determine or generate target data, based on the identified indication of the target state, from second monitoring data indicative of data output from one or more second monitoring data source(s) associated with the first industrial asset.
